# EUROPEAN PATENT SPECIFICATION

(11) **EP 1 730 859 B1**
(45) Date of publication and mention of the grant of the patent: **06.08.2008**
(21) Application number: 05721693.9
(22) Date of filing: 29.03.2005
(51) Int. Cl.: H04B 7/26

(54) **RADIO COMMUNICATION SYSTEM AND DOOR PHONE SYSTEM USING THE SAME**
RADIOKOMMUNIKATIONSANORDNUNG UND TÜRSYSTEM DAS ES VERWENDET
SYSTEME DE COMMUNICATION RADIO ET SYSTEME DE PORTIER PHONIQUE L'UTILISANT

(30) Priority: 30.03.2004 JP 2004098978; 30.03.2004 JP 2004098977; 30.03.2004 JP 2004098976; 02.04.2004 JP 2004109800
(43) Date of publication of application: 13.12.2006
(73) Proprietor: MATSUSHITA ELECTRIC INDUSTRIAL CO., LTD., Osaka 571-8501 (JP)
(72) Inventor: SUGITANI, Toshiyuki., c/o Matsushita El.Ind.Co.Ltd, Osaka-shi, Osaka 540-6319 (JP)
(74) Representative: Meldrum, David James
(86) International application number: PCT/JP2005/006553
(87) International publication number: WO 2005/096524

(56) References cited:
- EP-A- 1 091 609
- WO-A-99/14885
- WO-A-03/096696
- US-A1- 2004 037 251

## Description

### <FIELD OF THE INVENTION>

The present invention relates to a radio communication system and method of performing information communication using a radio signal.

### <BACKGROUND INFORMATION>

Recently, radio communication has changed from analog communication to digital communication, and a variety of methods for improving communication quality of the radio communication by taking advantage of characteristics of the digital communication have been developed.

In the digital radio communication, a to-be-transmitted voice signal or image signal is converted into digital information, and then, the communication is performed. When the information is transmitted from one communication device to another communication device, in order to reduce information loss due to a reception error, there is proposed a method of reducing information loss by establishing two radio links with a time division multiple access (hereinafter, referred to as TDMA) communication scheme and transmitting the same information on each of the radio links (see Pamphlet of International Publication No. 00/70811).

In the proposed method, TDMA communication is performed, information transmission is performed, first and second radio links start up at different time slots, a transmission side transmits the information from the same information source though the first and second radio links, and a reception side selects normally-received information by performing information reception at each of the time slots. As a result, since the same information is received twice, there is an effect that the information loss does not occur even in a case there is a reception error of one information.

In addition, an effect of improving communication quality due to time diversity can be obtained by performing transmission at different TDMA time slots, and another effect of improving communication quality due to frequency diversity can be obtained by performing frequency hopping and changing communication frequencies of the radio links at each of the time slots.

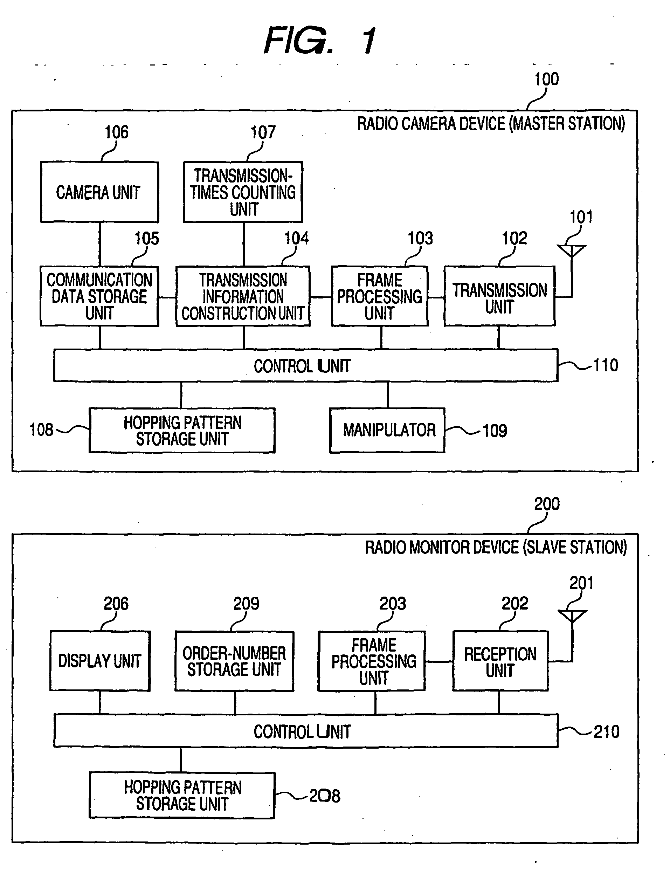

In addition, one of the most representative examples of digital communication schemes is DECT (Digital Enhanced Cordless Telecommunications) which has been widely used in Europe. In the DECT, communication is performed in a TDMA-TDD (Time Division Multiple Access-Time Division Duplex) schemes where a length of one frame is set as 10 msec, one frame is divided into 24 time slots 0 to 23, the time slots 0 to 11 are used for transmission from a base station (master station) to a sub station (slave station), the time slots 12 to 23 are used for transmission from the sub station (slave station) to the base station (master station) (see ETSI EN 300 175-2 V1.4.2, 4.2 Time Division Multiple Access (TDMA) structure (access in time), Selected Fig P12 Figure 1: Full slot format).

The base station (master station) transmits a control signal including identification information of the base station, a transmitting slot number, and the like at one of the slots 0 to 11.

The sub station (slave station) identifies the base station by receiving the control signal of the base station, establishes synchronization of frames and slots with the selected base station, and performs the intermittent reception of the control signal of the base station.

The base station performs a stand-by operation for an access request from the sub station at the 11 reception slots excluding a slot (separated by 12 slots from the slot for transmitting the control signal) from the slots 12 to 23 and notifies the stand-by frequency in accordance with one message of the control signal.

When a duplex radio link between the base and sub stations is established, the sub station selects one slot among the 11 slots excluding the slot (separated by 12 slots from the slot for transmitting the control signal) from the slots 12 to 23 and requests the base station for radio link establishment.

On the other hand, the base station transmits a response message corresponding to the radio link establishment request to the sub station at a slot separated by 12 slots from the slot for receiving the radio link establishment request from the sub station, and establishes a duplex radio link.

Next, in order to effectively utilize the slots, after the duplex communication starts, transmission starts by multiplexing the control signal at the slot for performing the duplex communication, and transmission of the slot for transmitting only the control signal stops.

Recently, since a DECT radio communication device has been used in an ISM (Industry Science Medical) band, there has been proposed a DECT standard for controlling communication frequency by using frequency hopping which is allowed to be used in the ISM band.

In the standard, the transmission of the control signal or the duplex communication between the base and sub stations is performed while the communication frequency changes in each of the frames by using 10 types of hopping patterns utilizing 45 types of frequencies in the ISM band (see ETSI TS 101 948 V1.1.1, 6 Modifications of the MAC layer, Selected Fig P11 Table 1: Mapping between hopsets and ISM RF carrier number c)

In a case where the communication is performed in the frequency hopping scheme, the base station notifies the sub station of a hopping pattern of the slot (for transmitting the control signal) and a stand-by hopping pattern by using the control signal, and the sub station establishes synchronization of frequency control of the frequency hopping with the base station and selects the hopping pattern used for the slot at the time when the radio link is established.

In the communication using the frequency hopping, in order to avoid communication failure due to an interference wave, a technique of channel swap is used. When reception errors consecutively occur at a specific frequency among frequencies used for communication, the frequency hopping control is performed by converting the current frequency into another frequency.

For example, in the DECT radio communication device, when communication is performed by controlling frequency hopping between the base and sub stations, the sub station manages reception errors at each of the frequencies, notifies the base station of a frequency change from the frequency (at which the reception error occurs) to another frequency when the reception errors consecutively occur at the specific, and update a duplex frequency hopping table, and after that, the communication is kept on without using the frequency at which the reception error occurs.

In addition, since the control signal is transmitted to multiple counterparties at the slot for transmitting the control signal, even if the reception error occurs at the reception side, the frequency change using the channel swap is not performed and the control signal is always transmitted at the same type of frequency.

For the reason, when communication is performed using the frequency hopping, the effective use of the slots cannot be obtained by multiplexing and transmitting the control signals at the slot for performing the duplex communication as described above.

As described above, in the method of improving the communication quality by transmitting and receiving the information on the same information source at the different time slots of the first and second radio links, there is a problem in that transmission cannot be performed if there is no available empty time slot, and there is another problem in that the communication quality cannot be improved if there is only one available empty time slot.

In addition, in the method of improving the communication quality by transmitting and receiving the information on the same information source at the different time slots of the first and second radio links, the transmission speed of the information is equal to that of one-radio-link communication even in a case where the communication state is good, so that there is a problem in that it is impossible to effectively utilize the radio resources.

In addition, in the method of improving the communication quality by transmitting and receiving the information on the same information source by using different hopping patterns (communication frequencies) of the first and second radio links, there is a problem in that the communication quality of the case where a hopping pattern of one radio link collides with other communication using the same hopping pattern is not different from that of the case where the communication is preformed by using the remaining radio link.

In addition, in an image information communication system for radio-communicating image information or voice information, an image information transmission device and an image information reception device establish a 1:1 duplex radio link and perform the communication. For the reason, in a case where the image information is simultaneously transmitted to multiple counterparties, it is necessary to construct a plurality of radio units for the image information transmission device side.

In case of using a radio device for performing multiple communication such as a TDMA (Time Division Multiple Access) scheme, multiple communication can be simultaneously performed without multiple radio device such as transmitters, receivers, and antennas, so that the image information can be simultaneously transmitted to multiple counterparties. However, in the TDMA scheme, since there is an upper limitation to a multiplexing number which is .determined by the number of time slots included in one frame, there is a limitation to the number of simultaneous transmission.

International patent application publication number WO99/14 relates to time diversity in a TDMA system. According to the disclosure, a TDMA radio telephone system is described wherein a base station transmits a slot and a repeat of the slot to a mobile station. The mobile station selectively receives the slots, detects soft information from each of the slots, and provides a combination of the soft information to a channel decoder, such as a viterbi decoder, for enhancing the operation of the channel decoder.

### SUMMARY OF THE INVENTION

Particular aspects of the invention are set out in the independant claims.

In order to solve the aforementioned problems, the present invention provides a radio communication system for transmitting data from a master station to one or more slave stations by using TDMA radio communication, wherein the master station divides a transmission signal into signals having a one-time-slot transmittable length and transmits the divided transmission signals multiple times repeatedly at M time slots including a time slot for transmitting a control signal, and the slave station performs reception of the M time slots transmitted from the master to receive one divided transmission information.

According to the radio communication system of the present invention, since the information is transmitted by using a TDMA radio communication and a simplex radio communication for transmitting and receiving the same information L times at the M time slots including the time slot for transmitting the control signal, the simplex radio communication for transmitting and receiving the same information L times can always be performed, so that highly-reliable information transmission can be obtained.

### <BRIEF DESCRIPTION OF THE DRAWINGS>

Fig. 1 is a block diagram showing a construction of a monitor system using a radio communication device according to a first embodiment of the present invention.
Fig. 2 is a view for explaining a construction of TDMA frames and slots and timing of frequency hopping in the radio communication device according to the first embodiment of the present invention.
Fig. 3(a) and (b) are a view for explaining a format used for communication at each slot in the radio communication device according to the first embodiment of the present invention.
Fig. 4 is a view showing an example of a hopping pattern used for the radio communication device according to the first embodiment of the present invention.
Fig. 5 is a block diagram showing a construction of a monitor system using a radio communication device according to a second embodiment of the present invention.
Fig. 6 is a view for explaining a construction of TDMA frames and slots and timing of frequency hopping in the radio communication device according to the second embodiment of the present invention.
Fig. 7 is a block diagram showing a construction of a door phone using a radio communication device according to a third embodiment of the present invention.
Fig. 8 is a view for explaining a construction of TDMA frames and slots and timing of frequency hopping in the radio communication device according to the third embodiment of the present invention.
Fig. 9 is a view for explaining an operation of transmission of image information in the radio communication device according to the third embodiment of the present invention.
Fig. 10 is a view for explaining an operation of voice communication together with transmission of image information in the radio communication device according to the third embodiment of the present invention.
Fig. 11 is a block diagram showing a construction of a door phone using a radio communication device according to a fourth embodiment of the present invention.
Fig. 12 is a view showing a hardware construction of a base station in a radio communication device according to the fourth embodiment of the present invention.
Fig. 13 is a view showing a hardware construction of an extended base station in a radio communication device according to the fourth embodiment of the present invention.
Fig. 14 is an appearance view of a front-door sub station in the radio communication device according to the fourth embodiment of the present invention.
Fig. 15 is an appearance view of a base station in the radio communication device according to the fourth embodiment of the present invention.
Fig. 16 is an appearance view of an extended base station in the radio communication device according to the fourth embodiment of the present invention.

### <BRIEF DESCRIPTION OF THE DRAWINGS>

### (First Embodiment)

Now, a first embodiment of the present invention will be described with reference to the drawings.

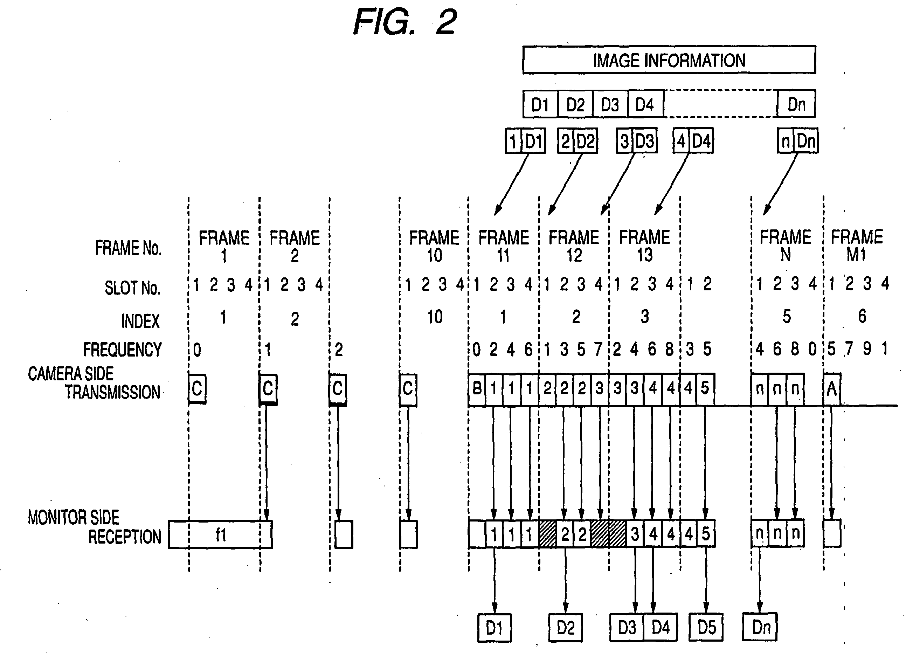

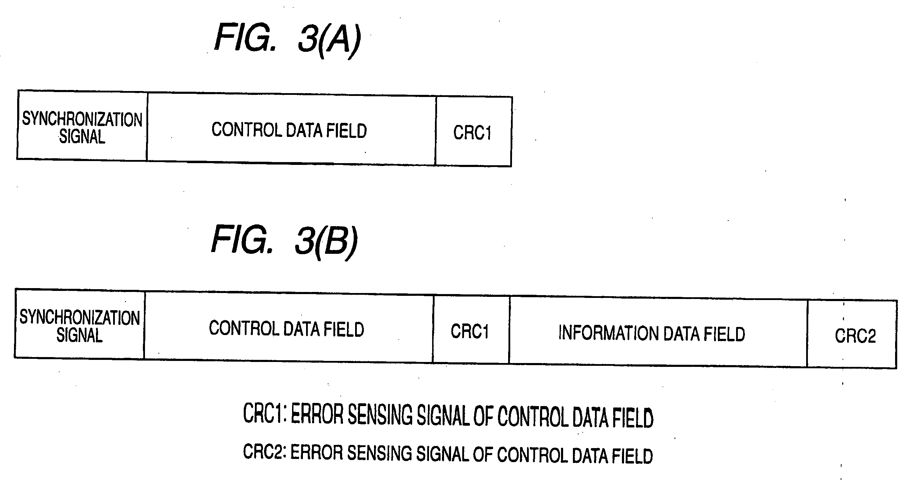

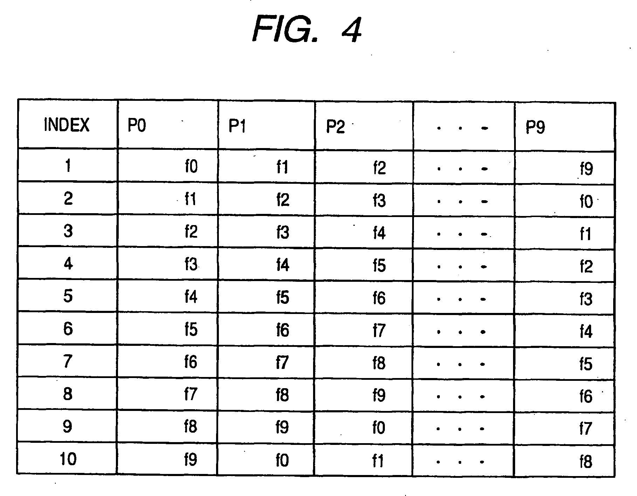

Fig. 1 is a block diagram showing a construction of a monitor system using a radio communication device according to the first embodiment of the present invention. Fig. 2 is a view for explaining a construction of TDMA frames and time slots and timing of frequency hopping in the radio communication device according to the first embodiment of the present invention. Fig. 3 is a view for explaining a format used for communication at each time slot in the radio communication device according to the first embodiment of the present invention. Fig. 4 is a view showing an example of a hopping pattern used for the radio communication device according to the first embodiment of the present invention.

Referring to Fig. 1, a radio camera device 100 has a function of transmitting image information picked up with a camera together with a radio-frequency signal and comprises an antenna 101, a transmission unit 102, a frame processing unit 103, a transmission information construction unit 104, a communication data storage unit 105, a camera unit 106, a transmission-times counting unit 107, a hopping pattern storage unit 108, a manipulator 109, and a control unit 110.

The transmission unit 102 performs TDMA radio transmission using frequency hopping by modulating, amplifying, and outputting an input data sequence.

The frame processing unit 103 adds a synchronization signal and an error-sensing error detection signal necessary for the TDMA communication to a control signal, image information, and notification information, generates a transmission data sequence in accordance with TDMA fames and time slots, and notifies the control unit 110 of timing of the frames and the time slots.

The transmission information construction unit 104 reads the image information stored in the communication data storage unit 105, divides the image information into image information pieces having a one-time-slot transmittable length, designates order numbers thereto, and outputs transmission data.

The communication data storage unit 105 stores one-screen image information.

The camera unit 106 is constructed with a camera and a conversion unit for converting a picture picked up with the camera into the one-screen image information and outputting the one-screen image information.

The transmission-times counting unit 107 counts transmission times of the image information.

The hopping pattern storage unit 108 is storage means for storing hopping patterns used for frequency hopping.

The manipulator 109 is input means for setting the transmission times.

The control unit 110 controls the whole radio camera device 100.

A radio monitor device 200 has a function of receiving and displaying the image information transmitted from the radio camera device 100 and comprises an antenna 201, a reception unit 202, a frame processing unit 203, a display unit 206, a hopping pattern storage unit 208, an order-number storage unit 209, and a control unit 210.

The reception unit 202 performs TDMA radio reception by using frequency hopping to amplify and demodulate the received radio signal and output reception data.

The frame processing unit 203 performs an error sensing process on the received reception data sequence in accordance with the TDMA fames and time slots, and outputs a control signals, image information, and notification information received at time slots which have no errors. In addition, the frame processing unit has a function of notifying the control unit 210 of timing of the frames and time slots.

The display unit 206 displays the received image information.

The hopping pattern storage unit 208 is hopping pattern storage means for storing a hopping pattern used for frequency hopping.

The order-number storage unit 209 is storage means for storing order numbers designated to the received image information.

The control 110 perform a control process of discarding the redundantly-received image information based on the order numbers of the received image information and displaying the image information and also has a function of controlling the whole radio monitor system 200.

Now, an operation of the monitor system as constructed above will be described.

States of the radio camera device 100 serving as a master station and the radio monitor device 200 serving as a slave station are classified into two states: an image communication state in which the image information is transmitted from the radio camera device 100 to the radio monitor device 200 and an idle state.

Firstly, an operation in the idle state will be described.

In the idle state, the radio camera device 100 transmits a control signal for notifying identification information of the number of the time slot for transmitting the control signal and the hopping pattern at a specific time slot in a frame.

Fig. 2 shows an example of a construction of a time slot. In addition, the example is an example for transmitting one-frame control signal at the time slot. 1. In the example, the time slot for transmitting the control signal is indicated by C. In addition, Fig. 3 shows a format of a data sequence which is transmitted at each time slot, and Fig. 3 (A) shows an example of a format used at the time slot for transmitting the control signal. Namely, in the example, the radio camera device 100 transmits the control signal at the time slot 1 in each of the frames loaded on a control data field of Fig. 3 (A). Here, the transmitted control signal comprises the identification information on the radio camera device 100, the number of the transmission time slots used for transmitting the control signal, and the hopping pattern.

The control unit 110 outputs the control signal in accordance with the timing of the transmission time slot of the control signal 103. The frame processing unit 103 adds a synchronization signal and an error sensing signal to the control signal and outputs the signals to the transmission unit 102. In addition, the error sensing signal is written in a CRC1 field of Fig. 3 (A), and an error detection code sequence (for example, a CRC code) generated from the control signal transmitted at the control data field is used.

The control unit 110 controls frequency hopping. Namely, the control unit reads a communication frequency according to the hopping pattern stored in the hopping pattern storage unit 108 and sets a transmission frequency of the transmission unit 102 in accordance with the transmission timing of the control signal. Fig. 4 shows an example of the hopping pattern stored in the hopping pattern storage unit 108. In the example, the frequencies f0 to f9 are repeatedly used for each of the hopping patterns P0 to P9.

Fig. 2 shows transmission frequencies used for frames when the control signal is transmitted in the hopping pattern P0 shown in Fig 3. Here, the transmission is performed at f0 in the frame 1, at f1 in the next frame 2, ..., and again at f0 in the frame 11.

The indexes shown in Figs. 2 and 4 are variables managed by the control unit 110 to control the frequency hopping, and indexes of 1 to 10 are repeatedly used for each frame. For example, in the frame indicated by the index 1, the transmission is controlled to be performed at f0 at the time slot using the hopping pattern P0, and the transmission is controlled to be performed at f1 at the time slot using the hopping pattern P1.

Now, control of the radio monitor device 200 in the idle state will be described.

In order to receive the control signal of the radio camera device 100, the radio monitor device 200 consecutively receives one of frequencies at which the radio camera device 100 transmits the control signal, and performs a complementary operation of the radio camera device 100. After the radio monitor device 200 consecutively receives the control signal of the radio camera device 100, it performs reception while changing the reception frequency in each of the consecutive frames and performs consecutive reception of the control signal of the radio camera device 100.

Next, the number of the transmission time slots used to transmit the control signal included in the control signal of the radio camera device 100 and the information on the hopping pattern are received, and synchronization of frames, time slots, and frequency hopping with the radio camera device 100 is established.

Namely, the control unit 210 reads an arbitrary one of frequencies stored in the hopping pattern storage unit 208 and controls the reception unit 202 to perform consecutive reception at the read frequency. The demodulated reception data sequence received by reception unit 202 is output to the frame processing unit 203.

The frame processing unit 203 detects a synchronization signal included in the reception data sequence; extracts the control data field and the error detection signal based on the synchronization signal if the synchronization signal is detected; performs error determination for the control data field based on the received error detection signal; and outputs the reception data sequence of the received control data field to the control unit 210 if a normal reception is determined.

The control unit 210 analyzes the reception data sequence input from the frame processing unit 203; determines whether or not the radio camera device 100 is a stand-by device based on the identification information of the radio camera device 100 included in the control signal if the control signal is included; and controls the radio camera device to proceed to an intermittent reception operation in each of the frames if the radio camera device 100 is a stand-by device.

Namely, similar to the radio camera device 100, the control unit 210 reads the consecutive reception frequency from the hopping pattern storage unit 208 based on the indexes managed by the control unit 210, and controls the reception unit 202 to perform reception in accordance with the timing of the time slot (for receiving the control signal of the radio camera device 100 in advance) while changing the reception frequencies in each of the frames.

In a case where the frequency read from the hopping pattern storage unit 208 is f1 corresponding to the index 1 of the hopping pattern P1 when the control unit 210 performs the consecutive reception in advance, after the control signal for f1 is received by using the consecutive reception, reception is performed at f2, f3, ... by increasing the index by 1 for each of the frames. In addition, when the number and hopping pattern of the transmission time slot used to transmit the control signal included in the control signal transmitted by the radio camera device 100 are received, synchronization of time slots and frequency hopping, that is, synchronization of indexes with the base station is established.

The control unit 210 determines the time slot (for receiving the control signal) based on the number of the time slot included in the received control signal and notifies the frame processing unit 203 of the number of the time slot (for receiving the control signal).

The frame processing unit 203 changes timing to receive the time slot (for receiving the control signal) with the notified time slot number and proceeds to a state in which TDMA synchronization with the radio camera device 100 is established, and after that, operates to notify the control unit 210 of timing of the TDMA frames and time slots.

Now, an operation in the image communication state will be described.

The radio camera device 100 periodically picks up images by using the camera unit 106 and proceeds to the image communication state in which the image information is transmitted to the radio monitor device 200. At this time, the control unit 110 sends an image-information storing request to the communication data storage unit 105, and the communication data storage unit 105 sends a pick-up request to the camera unit 106 and stores one-screen image information (picked up with a camera) output from the camera unit 106.

The control unit 110 directs the transmission information construction unit 104 to perform transmission with times input in advance by the manipulator 109. After that, if the frame processing unit 103 requests for the image information, the transmission information construction unit 104 divides the image information into image information pieces (hereinafter, referred to as "divided image information piece") having-a one-time-slot transmittable length with reference to the one-screen image information stored in the communication data storage unit 105, designates the order numbers thereto, and outputs the same divided image information piece (designated with the same order number) by times directed by the control unit 110 to the frame processing unit 103 while the transmission-times counting unit 107 counts the transmission times of the same image information.

The control unit 110 determines the transmission time slot of the image information and the hopping pattern and notifies the frame processing unit 103 of the time slot number of the determined image information. Next, the control unit 110 outputs the notification information to the frame processing unit 103 based on the timing of the frames and the time slots notified from the frame processing unit 103 in accordance with the timing of the time slot (for transmitting the control signal), and the frame processing unit 103 loads the notification information (instead of the control signal or as a portion of the control signal) or the control signal and the notification information on the control data field at the time slot (for transmitting the control signal), adds the synchronization signal and the error sensing signal thereto, and outputs the signals to the transmission unit 102.

The transmission unit 102 modulates the data sequence input from the frame processing unit 103 and performs transmission of the notification information through the antenna 101.

At this time, the control unit 110 reads the frequency from the hopping pattern storage unit 108 (by continuously controlling the frequency hopping at the time when the control signal is transmitted) in accordance with the timing of transmitting the notification information and controls the transmission unit 102 to set the transmission frequency of the time slot for transmitting the notification information. In addition, by the notification information transmitted at this time, the number of the time slot (for transmitting the image information) and the hopping pattern are notified. Next, the transmission start for the image data is notified to the frame processing unit 103. The frame processing unit 103 receiving the notification of the transmission start for the image data requests for the image information for the transmission information construction unit 104 in accordance with the timing of the time slot (for transmitting the image information), and outputs the transmitted order-number-designated divided image information pieces added with the synchronization signal and an error notification signal to the transmission unit 102 in accordance with the timing of the time slot of the image information designated by the control unit 110 and the time slot for transmitting the control signal. At this time, the format of the time slot for transmitting the image information is a format shown in Fig. 3 (B). The order number and the image information are transmitted at the information data field, and an error sensing signal of the information data filed is added thereto (CRC2 in Fig. 3 (B)). In addition, the control signal is transmit ted at the control data field even during the time when the image information is transmitted.

The transmission unit 102 modulates the data sequence input from the frame processing unit 103 and perform transmission thereof through the antenna 101. At this time, the control unit 110 reads the frequency corresponding to the hopping pattern of each of the time slots (for transmitting the predetermined image information) from the hopping pattern storage unit 108 in accordance with the timing of transmitting the images information and controls the transmission unit 102 to set the transmission frequency of the time slot for transmitting the image information. As a result, by the radio camera device 100, the transmission of the image information starts at the one or more time slots including the time slot for transmitting the control information.

Now, an operation in the image communication state of the radio monitor device 200 will be described.

In the idle state, the radio monitor device 200 receives the control signal transmitted from the radio camera device 100, and if the notification information transmitted by the radio camera device 100 is received at the same time slot as the time slot for transmitting the control signal, the radio monitor device is transitioned from the idle state to the image communication state.

When receiving the notification information, the radio monitor device 200 starts the reception of the image information at each of the time slots (for transmitting the image information by the radio camera device 100) including the time slot for transmitting the control information.

Namely, the control unit 210 controls the frame processing unit 203 and the reception unit 202 to start the reception of the time slot (for receiving the image information) based on the number of each of the time slots (for transmitting the image information) and the hopping pattern notified with the notification information.

The control unit 210 reads the frequency corresponding to the hopping pattern of each of the time slots (for transmitting the image information by the radio camera device 100) notified with the notification information from the hopping pattern storage unit 208 in accordance with the timing of the time slot (for receiving the image information) based on the timing of the frames notified from the frame processing unit 203 and the time slots and controls the reception unit 202 to set the reception frequency of the time slot for receiving the image information.

When the radio monitor device proceeds to the reception state for the image information and the image information is transmitted from the radio camera device 100, the radio signal of the corresponding time slot is received and demodulated by the reception unit 202 of the radio monitor device 200, and the reception data sequence is output to the frame processing unit 203.

The frame processing unit 203 extracts the transmitted order-number-designated divided image information pieces and the error sensing signal from the information data field based on the synchronization signal of the reception data sequence at each of the time slots (for receiving the image information) including the time slot for receiving the control signal, and if there is no error, notifies the control unit 210 of the received order-number-designated divided image information pieces.

The control unit 210 reads the order number stored in the order-number storage unit 209; performs a control process of displaying the received divided image information pieces on the display unit 206 and updating the order number stored in the order-number storage unit 209 as the received order number if the order number of the received divided image information pieces is not equal to the order number stored in the order-number storage unit 209; and performs a control process of discarding the received divided image information pieces if the order number of the received divided image information pieces is equal to the order number stored in the order-number storage unit 209.

Now, an example of an operation of transmitting the image information between the radio camera device 100 and the radio monitor device 200 will be described with reference to Fig. 2. Fig. 2 shows an example where TDMA communication is performed by dividing one frame into four time slots. More specifically, the time slot 1 in the frame is used for transmission of the control signal, the notification information, and the image information from the radio camera device 100 to the radio monitor device 200, and the time slots 2 to 4 in the frame are used for transmission of the image information from the radio camera device 100 to the radio monitor device 200. In addition, the hopping pattern used for each of the time slots includes one of 10 types of hopping patterns P1 to P9 constructed with 10 types of the frequencies f0 to f9 shown in Fig. 4. In the example, the time slot 1 is used for the hopping pattern P0, the time slot 2 is used for the hopping pattern P2, the time slot 3 is used for the hopping pattern P4, and the time slot 4 is used for the hopping pattern P6. In addition, in the example of Fig. 2 or 4, the index is incremented by 1 for each frame, and the index is a variable (for frequency hopping control managed by each of the control units) having a value circulating from 1 to 10. In the example of the first frame (frame 1) of Fig. 2, the index starts from 1. In addition, the frequency of Fig. 2 corresponds to the frequency of Fig. 4. In addition, f is omitted, and 1 of the frequency of Fig. 2 denotes f1. In addition, in the example, the image information is transmitted three times.

Firstly, the radio camera device 100 will be described.

The radio camera device 100 performs transmission of the control signal by using the hopping pattern P0 at the time slot 1 (time slot C at the camera side of Fig. 2). At this time, with respect to the transmission frequency, the index is 1 for the frame 1 and the frequency f0 (for the hoping pattern = P0 and the index = 1 in Fig. 4) is used; and the index is updated as 2 for the frame 2 and the frequency f1 (for the hoping pattern = P0 and the index = 2 in Fig. 4) is used.

After that, similarly, the frequency sequentially changes up to f9 according to the index. In addition, since the radio camera device 100 starts the transmission of the image information from the frame 11, the notification information is transmitted at the time slot 1 in the frame 11 (time slot B at the camera side of Fig. 2), and the transmission of the image information starts at the time slot 2 in the frame 11. At this time, with respect to the transmission frequency of the notification information, the control of the frequency hopping of the control signal is kept on and, since the index is 1 for the frame 11, the transmission is performed at the frequency f0.

With respect to the transmission frequency for each of the time slots for transmitting the image information, at the time slot 2, the index is 1 for the frame 11 and the frequency f2 (for the hoping pattern = P2 and the index = 1 in Fig. 4) is used and the index is 2 for the frame 12 and the frequency f3 (for the hoping pattern = P2 and the index = 2 in Fig. 4) is used; similarly, at the time slot 3, the index is 1 for the frame 11 and the frequency f4 (for the hoping pattern = P4 and the index = 1 in Fig. 4) is used and the index is 2 for the frame 12 and the frequency f5 (for the hoping pattern = P4 and the index = 2 in Fig. 4) is used; and at the time slot 4, the index is 1 for the frame 11 and the frequency f6 (for the hoping pattern = P6 and the index = 1 in Fig. 4) is used and the index is 2 for the frame 12 and the frequency f7 (for the hoping pattern = P6 and the index = 2 in Fig. 4) is used.

After that, similarly, the transmission frequencies of the time slots 2 and 3 are sequentially changed according to the indexes for each of the frames.

After the frame 12 until the transmission of the image information ends, at the time slot 1, both of the control signal and the image information are transmitted, the index is 2 for the frame 12, and the frequency f1 (for the hopping pattern = P0 and the index = 2 in Fig. 4) is used; and after that, similarly, at the time slot 1, until the transmission of the image information with the frequency (for the hopping pattern = P0) ends, both of the control signal and the image information are transmitted.

When the transmission of the one-screen image information ends, the radio camera device 100 notifies that the transmission of the image information ends at the time slot (time slot A at the camera side of Fig. 2) for transmitting the control signal.

Now, division of the image information, designation of the order number, and transmission control will be described. Fig. 2 shows an example where the image information is transmitted three times. The one-screen image information read in the communication data storage unit 105 is divided into n image information pieces D1, D2, ..., and Dn which are transmittable at one time slot in the transmission information construction unit 104. The order number 1 is designated to the image information piece D1, the order number 2 is designated to the image information piece D2, and after that, similarly, the order numbers are designated to the respective image information pieces. Next, the image information pieces D1 designated with the order number 1 is transmitted at the three time slots, that is, the time slot 2 in the frame 11 , the time slot 3 in the frame 11, and the time slot 4 in the frame 11; and the image information pieces D2 designated with the order number 2 is transmitted at the three time slots, that is, the time slot 1 in the frame 12, the time slot 2 in the frame 12, and the time slot 3 in the frame 12. Similarly, the order numbers are designated up to the final image information piece Dn and each of the image information pieces is transmitted at the three time slots (numerals of the time slots for transmission of the camera side of Fig. 2 denotes the order numbers).

Here, with respect to the frequency for transmitting the image information, the hopping pattern is selected so that the frequencies for transmitting the same image information piece are different from each other. The image information piece D1 is transmitted at the frequencies f2, f4, and f6; the image information piece D2 is transmitted at the frequencies f1, f3, and f5; and similarly, the same divided image information pieces are transmitted at the different frequencies.

On the other hand, the radio monitor device 200 initially performs consecutive reception in order to receive the control signal. In Fig. 2, the consecutive reception is performed at the frequency f1, and the control signal from the radio camera device 100 is compensated at the time slot 1 in the frame 2.

The radio monitor device 200 which compensates for the control signal at the time slot 1 in the frame 2 establishes TDMA synchronization based on the time slot number (of designating the transmission of the control signal) and the hopping pattern included in the control signal, matches the index for controlling the frequency hopping with the transmission side, and proceeds to the intermittent reception state of the time slot 1.

Next, when the notification information transmitted at the time slot 1 in the frame 11 is received, in addition the reception of the time slot 1, reception of the time slot for transmitting the image information (time slots 2 to 4 in the example of Fig. 2) starts based on the number of each of the time slots (for transmitting the image information) and the hopping pattern notified with the notification information. When the image information is received at each of the time slots 1 to 4, the control unit 210 performs a control process of displaying only the image information received by the base station and operates to discard the redundantly-received image information based on the order numbers thereof.

When the end of transmission of the image information at the time slot (time slot A at the camera side of Fig. 2) for transmitting the control signal is notified, the reception of the time slot (time slots 2 to 4 in Fig. 2) except for the time slot for receiving the control signal stops, and the reception of only the control signal is performed, so that the transmission start for the next image, (that is, the reception of the notification information) is prepared.

In addition, although the transmission of the image information is performed at all the time slots including the time slot for transmitting the control signal in the example of Fig. 2, according to the number of the time slots (for transmitting the image information) and the state of the time slot (in which the time slot can or cannot be used),the transmission of the image information may be controlled to be performed at only the time slot (for transmitting the control signal) or at all the time slot as described in the above example.

According to the present invention, the transmission side divides the transmission information into image information pieces having a one-time-slot transmittable length, transmits each of the image information pieces multiple times; and the reception side discards the redundantly-received information from the multiple-times received information. Therefore, all the multiple-times-transmitted same information is treated as a reception error and the occurrence frequency of loss of the received information can be reduced, so that communication quality can be improved.

In addition, since the frequency for the multiple-times transmission and reception of the same information is changed by using the frequency hopping, even in a case where a reception error occurs due to interference at a portion of frequency band used by an interference wave, all the multiple-times-transmitted same information is treated as a reception error and the occurrence frequency of loss of the received information can be reduced, so that communication quality can be improved.

In addition, since the transmission information is transmitted at the time slot for transmitting the control signal, the transmission information can be transmitted and received multiple times according to the available time slots, so that the time slots can be effectively used. In addition, advantageously, even in a case where time slots except for the time slot for transmitting the control signal cannot be used, the transmission information can always be transferred.

In addition, in a case where the image information is transmitted at the time slot for transmitting the control signal, although both of the control signal and the image information are transmitted in the example shown in Fig. 3 (B), transmission may be performed in a format where the time slot (for transmitting the image information) includes the time slot (for transmitting the control signal) excluding the control data field and the error sensing signal of the control data field, that is, the format constructed with the synchronization signal, the information data field, and the error sensing signal of the information data field. In this case, the control data field and the error sensing signal of the control data field can be used to transmit the image information, so that transmission speed of the information can be improved.

In addition, although transmission of the notification information is preformed at the control data field instead of the control signal in the example, the reception side may always receive the control data field and the information data field at the time slot for receiving the control signal, and the transmission side may always transmit the control signal at the control data field and transmit the notification information at the information data field during the transmission of the image information. In this case, since the control data field is used for synchronization of the master station and the slave station and the information data field is used for transmission and reception of the transmission information, the control processes thereof can be separately performed, so that control can be easily performed.

In addition, although the number of the time slot for transmitting the image information and the hopping pattern is notified with the notification information in the example, only the transmission start of the image information may be notified with the notification information. In this case, the transmission/reception frequency (hopping pattern) of time slots excluding the time slot for receiving the control signal and transmitted can be implemented by performing determination in advance based on the transmission/reception frequencies of the time slot for transmitting the control signal and received.

In addition, although the number of the time slot for transmitting the image information and the hopping pattern is notified with the notification information in the example, the information can be transferred without the notification of the transmission start of the image information with the notification information by performing determination of the time slot for transmitting the image information and the frequency (hopping pattern) and always performing reception in the reception side, and for example, the transmission and reception of information on the transmission start of the image information and the time slots for transmitting the image information is not necessary by determining the communication frequency (hopping pattern) at each of the time slots based on the communication frequency (hopping pattern) of the control signal and always performing the reception in the reception side, so that information transfer can be implemented with simpler control.

### (Second Embodiment)

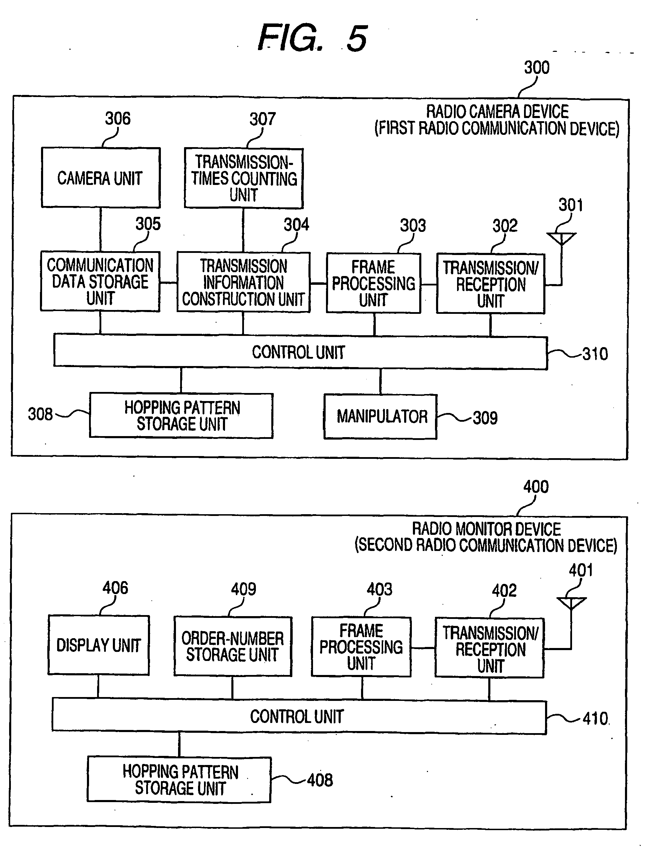

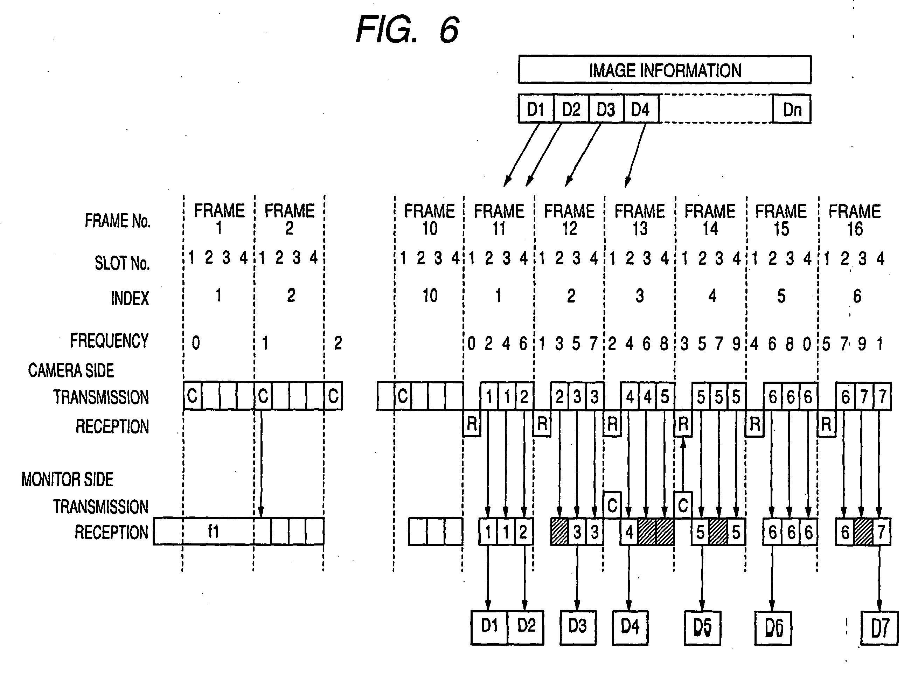

Fig. 5 is a block diagram showing a construction of a monitor system using a radio communication device according to a second embodiment of the present invention. Fig. 6 is a view for explaining a construction of TDMA frames and slots and timing of frequency hopping in the radio communication device according to the second embodiment of the present invention.

Referring to Fig. 5, a monitor system as a radio communication system according to the present invention, comprises a radio camera device 300 as a first radio communication device for transmitting image information picked up with a camera together with a radio signal and a radio monitor device 400 as a second radio communication device for receiving and displaying the image information transmitted from the radio camera device 300.

The radio camera device 300 comprises: an antenna 301; a transmission/reception unit 302 for performing TDMA radio communication (transmission and reception) using frequency hopping by modulating and amplifying an input data sequence, amplifying and demodulating an received radio signal, and outputting the received data; a frame processing unit 303 for adding a synchronization signal and an error-sensing error detection code necessary for the TDMA communication to image information and notification information, generating a transmission data sequence in accordance with TDMA fames and time slots, performing error sensing for the received reception data sequence in accordance with the TDMA frame and time slots, outputting the reception data received at the time slot where there is no error, and notifying the described-below control unit 310 of timing of the frames and the time slots; a transmission information construction unit 304 for reading image information stored in the described-below communication data storage unit 305, dividing the image information into image information pieces having a one-time-slot transmittable length, designating order numbers thereto, and outputting transmission data; a communication data storage unit 305 for storing one-screen image information; a camera unit 306 constructed with a camera and a conversion unit for converting a picture picked up with the camera into the one-screen image information and outputting the one-screen image information; a transmission-times counting unit 307 for counting transmission times of the image information; and a hopping pattern storage unit 308 for storing a hopping pattern used for the frequency hopping; a manipulator 309 for setting the transmission times; and a control unit 310 for controlling the whole radio camera device 300.

In addition, the radio monitor device 400 comprises: an antenna 401; a transmission/reception unit 402 for performing TDMA radio communication (transmission and reception) using frequency hopping by modulating and amplifying an input data sequence, amplifying and demodulating an received radio signal, and outputting the received data; a frame processing unit 403 for adding a synchronization signal and an error-sensing error detection code necessary for the TDMA communication to a transmission-times setting signal, generating a transmission data sequence in accordance with TDMA fames and time slots, performing error sensing for the received reception data sequence in accordance with the TDMA frame and time slots, outputting the image information and the notification information received at the time slot where there is no error, and notifying the described-below control unit 410 of timing of the frames and the time slots; a display unit 406 for displaying the received image information; a hopping pattern storage unit 408 for storing a hopping pattern used for the frequency hopping; an order-number storage unit 409 for storing order numbers designated to the received image information; and a control unit 410 for performing a control process of discarding the redundantly-received image information based on the order numbers of the received image information, displaying the received image information and also controlling the whole radio monitor system 400.

Now, an operation of the monitor system as constructed above will be described.

The radio camera device 300 periodically picks up images by using the camera unit 306 and performs transmission of the image information to the radio monitor device 300. At this time, the control unit 310 sends an image-information storing request to the communication data storage unit 305, and the communication data storage unit 305 sends a pick-up request to the camera unit 306 and stores one-screen image information output from the camera unit 306.

In addition, the control unit 310 directs the transmission information construction unit 304 to perform transmission with times input in advance by the manipulator 309. After that, if the frame processing unit 303 requests for the image information, the transmission information construction unit 304 divides the image information into image information pieces having a one-time-slot transmittable length with reference to the one-screen image information stored in the communication data storage unit 305, designates the order numbers thereto, and outputs the same divided image information piece (designated with the same order number) by times directed by the control unit 310 to the frame processing unit 303 while the transmission-times counting unit 307 counts the transmission times of the same image information.

In addition, the control unit 310 determines the transmission slot of the notification information and the image information and the hopping pattern of each of the slots and notifies the frame processing unit 303 of the slot number of the determined notification information and image information. Next, the control unit outputs the notification information to the frame processing unit 303. The frame processing unit 303 adds the synchronization signal and the error sensing signal to the notification information at the timing of the slot of the notification information directed by the control unit 310 and outputs the signal to the transmission/reception unit 302. The transmission/reception unit 302 modulates the data sequence input from the frame processing unit 303 and performs transmission of the notification information through the antenna 301.

At this time, the control unit 310 reads the frequency corresponding to the hopping pattern of the slot (for transmitting the predetermined notification information) from the hopping pattern storage unit 308 in accordance with the timing of transmitting the notification information and controls the transmission/reception unit 302 to set the transmission frequency of the slot for transmitting the notification information. In addition, by the notification information transmitted at this time, the identification number, the number and hopping pattern of the slot (for transmitting the notification information), and the number and hopping pattern of the slot (for transmitting the image information) are notified.

In addition, the control unit 310 repeatedly controls reception of the notification information with each of the frequencies included in the hopping pattern while changing the reception frequency in each of the frames based on the frame signal of notifying the frame timing from the frame processing unit 303. Next, the transmission start for the image data is notified to the frame processing unit 303. The frame processing unit 303 receiving the notification of the transmission start for the image data requests for the image information for the transmission information construction unit 304 in accordance with the timing of the slot (for transmitting the image information), and outputs the transmitted order-number-designa ted divided image information pieces added with the synchronization signal and an error sensing signal to the transmission/reception unit 302 in accordance with the timing of the slot of the image information designated by the control unit 310. The transmission/reception unit 302 modulates the data sequence input from the frame processing unit 303 and performs transmission thereof through the antenna 301.

At this time, the control unit 310 reads the frequency corresponding to the hopping pattern of each of the time slots (for transmitting the predetermined image information) from the hopping pattern storage unit 308 in accordance with the timing of transmitting the image information and controls the transmission/reception unit 302 to set the transmission frequency of the slot for transmitting the image information.

Now, an operation in the image communication state of the radio monitor device 400 will be described.

The radio monitor device 400 operates to receive the notification information transmitted from the radio camera device 300 in a stand-by state, and if the notification information is received, TDMA and frequency synchronization with the radio monitor device 400 is established, and the transmission of the image information starts. Namely, in the stand-by state, the control unit 410 reads the frequency (at which the radio camera device 300 transmits the notification information) from the hopping pattern storage unit 408 and controls the transmission/reception unit 402 to perform consecutive reception at the read frequency.

When the notification information transmitted from the radio camera device 300 is received and the reception data demodulated by the transmission/reception unit 402 is output to the frame processing unit 403, the frame processing unit 403 extracts the notification information and the error sensing signal based on the synchronization signal of the reception data sequence, and if there is no error, notifies the control unit 410 of the received notification information.

The control unit 410 analyzes the identification number included in the notification information, and if the notification information is transmitted from a radio camera device the control unit and desired by the control unit, the TDMA and frequency hopping synchronization is established based on the number and hopping pattern of the slot (for transmitting the notification information) included in the notification information, the numbers and hopping pattern of the slots (for transmitting the image information), and controls the frame processing unit 403 and the transmission/reception unit 402 to start reception of the slot for receiving the image information.

Namely, the control unit 410 notifies the frame processing unit 403 of the number of the slot for receiving the notification information and the number of the slot for receiving the image information, and after that, directs the frame processing unit 403 to operate in synchronization with the reception signal. In accordance with the direction, the frame processing unit 403 establishes synchronization by matching the slot number of the slot (for receiving the notification information) with the directed slot number; and after that, operates to notify the control unit 410 of the timing of the frame and slot; corrects synchronization based on the synchronization signal every time when the image information is received; and operates to maintain synchronization with the radio camera device 300.

In addition, the control unit 410 reads the frequency corresponding to the hopping pattern of each of the slot (for transmitting the image information by the radio camera device 300) notified with the notification information by the hopping pattern storage unit 408 based on the timing of the frame and slot notified from the frame processing unit 403 in accordance with the timing of the slot for receiving the image information, and controls the transmission/reception unit 402 to set the reception frequency of the slot for receiving the image information.

Like this, TDMA and frequency synchronization between the radio camera device 300 and the radio monitor device 400 is established, and the radio monitor device 400 proceeds from the stand-by state to a reception state of the image information. When the image information is transmitted from the radio camera device 300, the radio signal of the correspondi ng slot is received and demodulated by the transmission/reception unit 402 of the radio monitor device 400, and the reception data sequence is output to the frame processing unit 403. The frame processing unit 403 extracts the transmitted order-number-designated divided image information pieces and the error sensing signal based on the synchronization signal of the reception data sequence, and if there is no error, notifies the control unit 410 of the received order-number-designated divided image information pieces.

The control unit 410 reads the order number stored in the order-number storage unit 409; performs a control process of displaying the received divided image information pieces on the display unit 406 and updating the order number stored in the order-number storage unit '409 as the received order number if the order number of the received divided image information pieces is not equal to the order number stored in the order-number storage unit 409; and perform a control process of discarding the received divided image information pieces if the order number of the received divided image information piece is equal to the order number stored in the order-number storage unit 409.

Now, an operation of changing the transmission times of the image information in response to a request from the radio monitor device 400 will be described.

When the transmission of the image information starts, the control unit 310 of the radio camera device 300 starts a control of receiving the radio signal from the radio monitor device 400 at the slot for transmitting the notification information. Namely, the control unit 310 succeeds to the hopping pattern for transmitting the notification information at the slot (for transmitting the notification information) based on the timing of the frame and slot notified from the frame processing unit 303, reads the frequency from the hopping pattern storage unit 308, sets the reception frequency of the transmission/reception unit 302, and controls the transmission/reception unit 302 to perform reception at the slot for transmitting the notification information.

In addition, when determining that the reception state is deteriorated based on the number of the normally-received same image information, continuity of the order numbers, or the like, the control unit 410 of the radio monitor device 400 starts a control of requesting for changing the transmission times of the image information. When determining that the reception state is deteriorated, the control unit 410 succeeds to the hopping pattern for transmitting the notification information at the slot (for transmitting the notification information) based on the timing of the frame and slot notified from the frame processing unit 403, reads the frequency from the hopping pattern storage unit 408, sets the transmission frequency of the transmission/reception unit 402, controls the transmission/reception unit 402 to perform transmission at the slot for transmitting the notification information, and outputs the transmission-times directing signal for requesting the frame processing unit 403 to change the transmission times. The frame processing unit 403 adds the synchronization signal and the error sensing signal to the transmission-times directing signal and outputs the signals to the transmission/reception unit 402. The transmission/reception unit 402 modulates the data sequence input from the frame processing unit 403 and transmits the transmission-times directing signal through the antenna 401.

On the other hand, in the radio camera device 300, when the transmission-times directing signal transmitted from the radio monitor device 400 is received by the transmission/reception unit 302 and the demodulated received data is output to the frame processing unit 303, the frame processing unit 303 extracts the transmission-times directing signal and the error sensing signal based on the synchronization signal of the reception data sequence, and if there is no error, notifies the control unit 310 of the received transmission-times directing signal.

When receiving the transmission-times directing signal, the control unit 310 notifies the transmission information construction unit 304 to perform transmission by the directed transmission times. After that, in response to request for the image information from the frame processing unit 303, the transmission information construction unit 304 converts operation to output the same divided image information piece designated with the same order numbers as the directed times from the control unit 310 newly to the frame processing unit 303.

Now, an example of an operation of transmitting the image information between the radio camera device 300 and the radio monitor device 400 will be described with reference to Fig. 6 shows an example where TDMA communication is performed by dividing one frame into four slots. In the example shown in Fig. 6, the slot 1 in the frame is used for transmission of the notification information from the radio camera device 300 to the radio monitor device 400 and transmission of the transmission-times directing signal from the radio monitor device 400 to the radio camera device 300, and the slots 2 to 4 in the frame are used for transmission of the image information from the radio camera device 300 to the radio monitor device 400.

In addition, the hopping pattern used for each of the slots is equal to that of the first embodiment. One of the 10 types of hopping patterns P0 to P9 constructed with the 10 types of frequency f0 to f9 described in the first embodiment of Fig. 4 is used. In the embodiment, the slot 1 is used for the hopping pattern P0, the slot 2 is used for the hopping pattern P2, the slot 3 is used for the hopping pattern P4, and the slot 4 is used for the hopping pattern P6.

In addition, the index of Figs. 6 and. 4 is incremented by 1 for each frame, and the index is a variable (for frequency hopping control managed by each of the control units) having a value circulating from 1 to 10. In the example of the first frame (frame 1) of Fig. 6, the index starts from 1. In addition, the frequency of Fig. 6 corresponds to the frequency of Fig. 4. In addition, f is omitted, and 1 of the frequency of Fig. 6 denotes f1.

Firstly, the radio camera device 300 will be described.

The radio camera device 300 starts the transmission of the notification information. The notification information is received at the time slot 1 (time slot C at the camera side of Fig. 6) and transmitted at one time at each of the frequencies, so that the notification information is transmitted ten times totally from the frame 1 to the frame 10. At this time, with respect to the transmission frequency, the index is 1 for the frame 1 and the frequency f0 (for the hopping pattern = P0 and the index = 1 in Fig. 4) is used. The index is updated as 2 for the frame 2 and the frequency f1 (for the hoping pattern = P0 and the index = 2 in Fig. 4) is used. After that, similarly, up to the frame 10, the frequency sequentially changes up to f9 according to the index.

Next, the radio camera device 300 starts the reception at the slot 1 and the transmission of the image information at the slots 2 to 4 from the frame 11. The reception frequency of the slot 1 is kept on as that of the hopping pattern for transmitting the notification information, the index is updated as 1 for the frame 11, and the frequency f0 (for the hopping pattern = P0 and the index = 1 in Fig. 4) is used. The index is updated as 2 for the frame 12 and the frequency f1 (for the hopping pattern = p0 and the index = 2 in Fig. 4) is used. After that, similarly, the frequency is changed according to the index (slot R at the camera side of Fig. 6).

In addition, with respect to the transmission frequency for transmitting the image information, the index is 1 for the frame 11 of the slot 2 and the frequency f2 (for the hopping pattern = P2 and the index = 1 in Fig. 4) is used. The index is 2 for the frame 12 and the frequency f3 (for the hopping pattern = P2 and the index = 2 in Fig. 4) is used. Similarly, index is 1 for the frame 11 of the slot 3 and the frequency f4 (for the hopping pattern = P4 and the index = 1 in Fig. 4) is used. The index is 2 for the frame 12 of and the frequency f5 (for the hopping pattern = P4 and the index = 2 in Fig. 4) is used. The index is 1 for the frame 11 of the slot 4 and the frequency f6 (for the hopping pattern = P6 and the index = 1 in Fig. 4) is used. The index is 2 for the frame 12 and the frequency f7 (for the hopping pattern = P6 and the index = 2) is used. After that, similarly, the transmission frequencies of the slots 2 to 4 are sequentially changed according to the indexes.

Now, division of the image information, designation of the order number, and transmission control will be described.

In the example of Fig. 6, the image information is transmitted twice, and when the transmission-times directing signal is received from the radio monitor device 400, the operation is converted to transmit the image information four times.

The one-screen image information read in the communication data storage unit 305 is divided into n image information pieces D1, D2, ..., and Dn which are transmittable at one slot. The order number 1 is designated to the image information piece D1, the order number 2 is designated to the image information piece D2, and after that, similarly, the order numbers are designated to the respective image information pieces.

Next, the image information pieces D1 designated with the order number 1 is transmitted at the slot 2 in the frame 11 and the slot 3 in the frame 3; the image information pieces D2 designated with the order number 2 is transmitted at the time slot 4 in the frame 11 and the time slot 2 in the frame 12; the image information pieces D3 designated with the order number 3 is transmitted at the time slot 3 in the frame 12 and the time slot 4 in the frame 12; and the image information pieces D4 designated with the order number 4 is transmitted at the time slot 2 in the frame 13 and the time slot 3 in the frame 13 (numerals of the time slots for transmission of the camera side of Fig. 6 denotes the order numbers).

Next, after the transmission of the image information piece D5 starts, when the transmission-times directing signal of directing the transmission times as 4 is received from the radio monitor device 400 at the slot 1 in the frame 14 (the slot corresponding to the slot C at the monitor side of Fig. 6), each of the image information pieces D5, D6, ... are transmitted four times. Here, with respect to the frequency for transmitting the image information, the hopping pattern is selected so that the frequencies for transmitting the same image information piece are different from each other. The image information piece D1 is transmitted at the frequencies f2 and f4; the image information piece D2 is transmitted at the frequencies f6 and f3; and similarly, the same divided image information pieces are transmitted at the different frequencies.

On the other hand, the radio monitor device 400 initially performs consecutive reception in order to receive the notification information. In Fig. 2, the consecutive reception is performed at the frequency f1, and the notification information from the radio camera device 300 is compensated at the time slot 1 in the frame 2.

The radio monitor device 400 which compensates for the notification information at the time slot 1 in the frame 2 establishes TDMA synchronization based on the slot number (of designating the transmission of the notification information) and the hopping pattern included in the notification information and matches the index for controlling the frequency hopping with the transmission side. Next, transmission of the slot for transmitting the image information (time slots 2 to 4 in the example of Fig. 6) starts based on the number of each of the slots (for transmitting the image information) and the hopping pattern notified with the notification information. When the image information is received, the control unit 610 performs a control process of displaying only the newly-received image information and operates to discard the redundantly-received image information based on the order numbers thereof.

In addition, in a case where the reception state of the image information is deteriorated, the control unit 410 transmits the transmission-times directing signal to the radio camera device 300 to increase the transmission times. In the example of Fig. 6, the transmission-times directing signal for increasing the transmission times by 4 at the slot 1 in the frame 14 (slot C for transmission of the monitor side) is transmitted.

The slot for transmitting the transmission-times directing signal is selected as the slot for transmitting the notification information in advance. With respect to the transmission frequency, the control of the frequency hopping (at the time when the notification information is received) is kept on, and in the example of Fig. 6, the transmission is performed at the frequency f3. In addition, when the reception state is good, the control unit 410 transmits the transmission-times directing signal to the radio camera device 300 to reduce the transmission times, so that the transmission speed can be increased.

Although the increase and decrease are transmitted from the radio monitor device 400 to the radio camera device 300 in the embodiment, only the increase may be transmitted and the radio camera device 300 may repeat transmission predetermined multiple times after communication between the radio monitor device 400 and the radio camera device ends until the communication starts again.

Like this, according to the present invention, the transmission side divides the transmission information into image information pieces having a one-slot transmittable length, transmits each of the image information pieces multiple times; and the reception side discards the redundantly-received information from the multiple-times received same information. Therefore, all the multiple-times-transmitted same information is treated as a reception error and the occurrence frequency of loss of the received information can be reduced, so that communication quality can be improved.

In addition, since the frequency for the multiple-times transmission and reception of the same information is changed by using the frequency hopping, even in a case where a reception error occurs due to interference at a portion of frequency band used by an interference wave, all the multiple-times-transmitted same information is treated as a reception error and the occurrence frequency of loss of the received information can be reduced, so that communication quality can be improved.

In addition, since the transmission times of the same information can be increased or decreased according to the communication state irrespective of the number of the used slots, it is possible to optically control the transmission times according to the number of available slots and the communication state, so that radio resources can be effectively utilized.

In addition, although the embodiment shows an example where the information on the slot (for transmitting the image information) and the hopping pattern are notified with the notification information from the radio camera device 300 and the radio monitor device determines the control of the receiving slot in accordance with the received notification information, the slot (for transmitting the image information) and the hopping pattern may be determined in advance, so that the radio camera device 300 may transmit the control signal for notifying the start of the image transmission (when the image transmission is performed) and perform the image transmission at the predetermined slot and hopping pattern based on the control signal, and the radio monitor device 400 may receive the control signal for notifying the start of the image transmission and perform the image reception at the predetermined slot and hopping pattern based on the received control signal.

In addition, the radio camera device 300 may transmit the control signal including the information on the number of the transmitting slot and the hopping pattern at a specific slot; the radio monitor device 400 may receive the control signal of the radio camera device 300 in the stand-by state; and when the radio camera device '300 and the radio monitor device 400 perform the image transmission in a state where the synchronization of TDMA and frequency hopping is established, the start of the image transmission from the radio camera device 300 to the radio monitor device 400 may be notified with the control signal.

### (Third Embodiment)

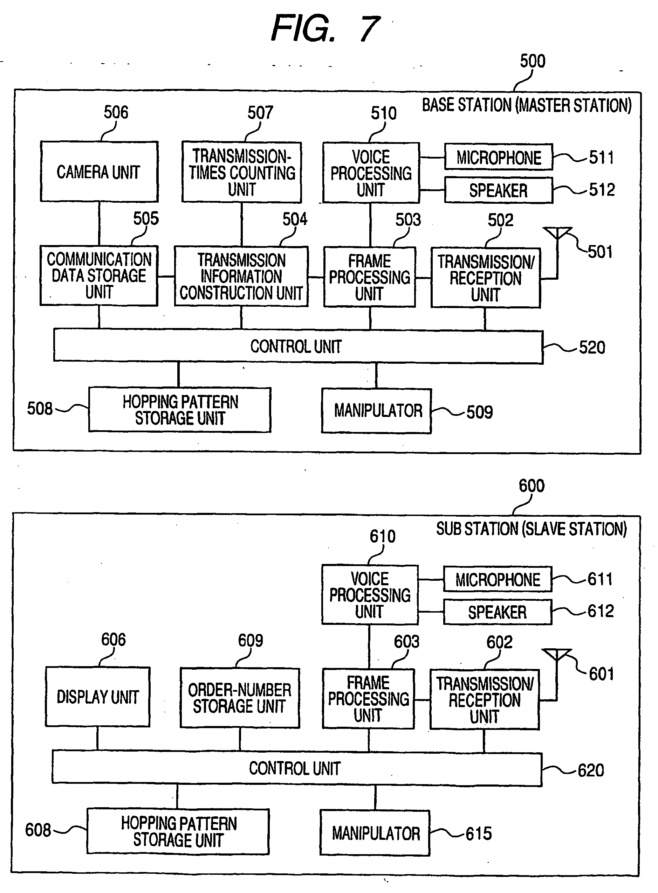

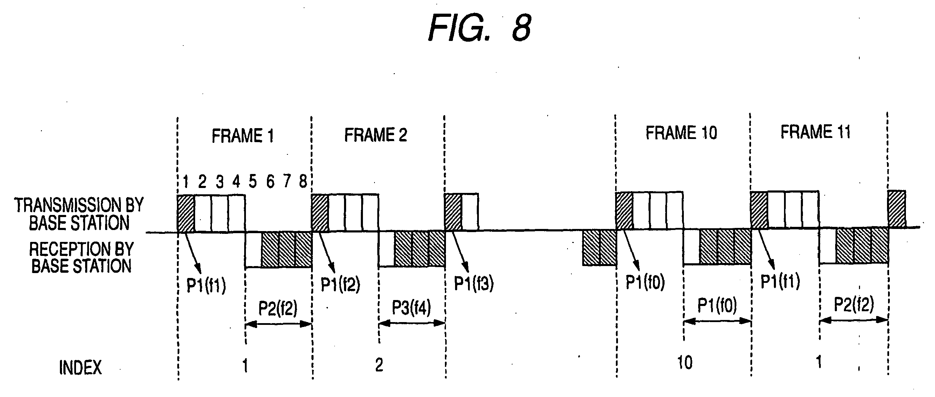

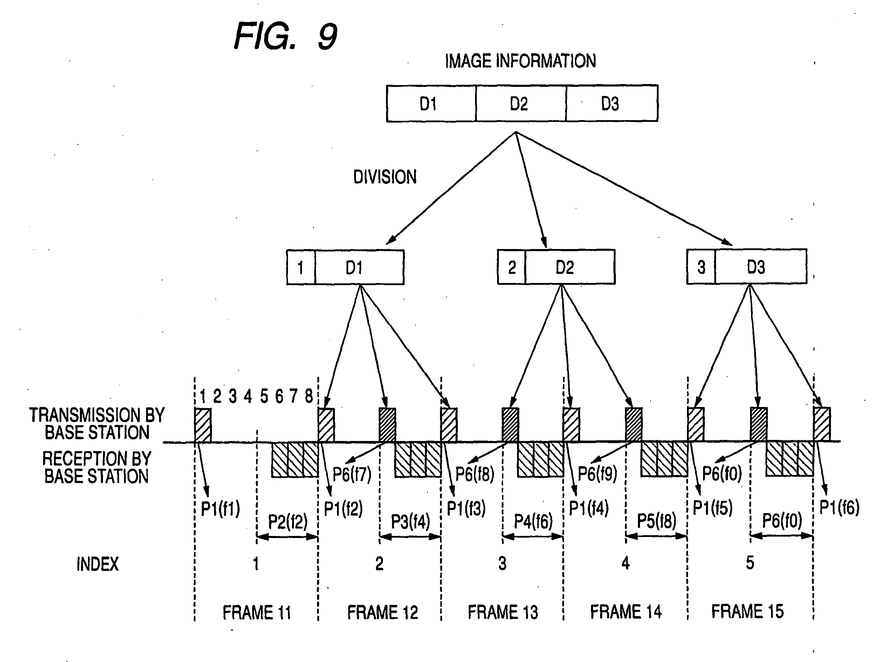

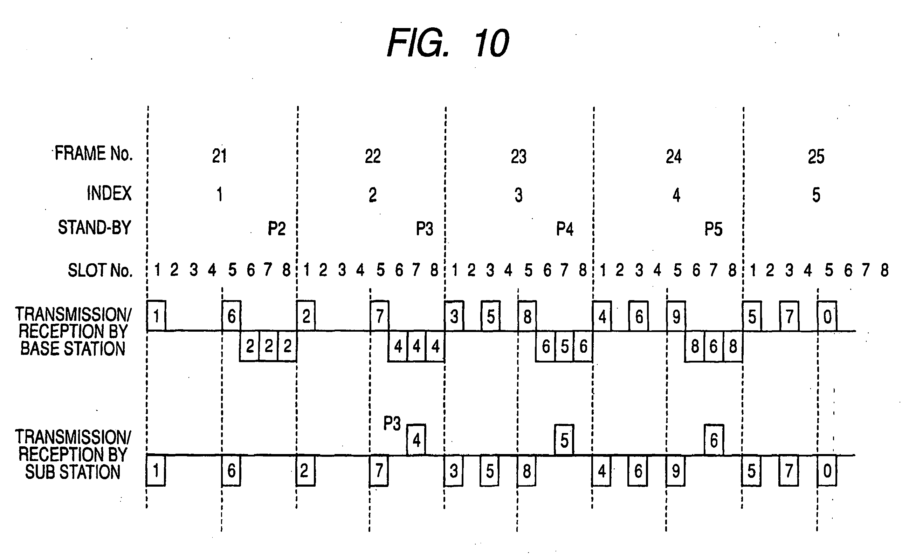

Fig. 7 is a block diagram showing a construction of a door phone using a radio communication device according to a third embodiment of the present invention. Fig. 8 is a view for explaining a construction of TDMA frames and slots and timing of frequency hopping in the radio communication device according to the third embodiment of the present invention. Fig. 9 is a view for explaining an operation of transmission of image information in the radio communication device according to the third embodiment of the present invention. Fig. 10 is a view for explaining an operation of voice communication together with transmission of image information in the radio communication device according to the third embodiment of the present invention.

In Fig. 7, a base station 500 serving as a master station is a door phone for transmitting image information (picked up with a camera) together with a radio signal and comprises a transmission/reception unit 502, a frame processing unit 503, a transmission information construction unit 504, a communication data storage unit 505, a camera unit 506, a transmission-times counting unit 507, a hopping pattern storage unit 508, a manipulator 509, a voice processing unit 510, a microphone 511, a speaker, and a control unit 520.

The transmission/reception unit 502 performs TDMA-TDD radio communication using frequency hopping by: modulating, amplifying, and outputting an input data sequence; and amplifying and demodulating a received radio signal and outputting a received data.

The frame processing unit 503 adds a synchronization signal and an error-sensing error detection signal necessary for the TDMA-TDD radio communication to a control signal, image information, and a voice signal, generates a transmission data sequence in accordance with TDMA fames and slots, performs an error detection process on the received reception data sequence in accordance with the TDMA frames and slots, outputs the control signal, the voice signal, and the like, received at the slot where there is no error, and notifies the control unit 520 of timing of the frames and the slots.

The transmission information construction unit 504 reads the image information stored in the communication data storage unit 505, divides the image information into image information pieces having a one-slot transmittable length, designates order numbers thereto, and outputs transmission data.

The communication data storage unit 505 is means for storing one-screen image information.

The camera unit 506 is constructed with a camera and a conversion unit for converting a picture picked up with the camera into the one-screen image information and outputting the one-screen image information.

The transmission-times counting unit 507 has a function of counting transmission times of the image information.

The hopping pattern storage unit 508 stores hopping patterns used for the frequency hopping.

The manipulator 509 is used to input a call start.

The voice processing unit 510 converts a digital voice signal input from the voice processing unit 503 to an analog voice signal and outputs the analog voice signal to the speaker 512, and it converts voice input from the microphone 511 to the digital voice signal and outputs the digital voice signal to the voice processing unit 510.

The control unit 520 has a function of controlling the whole base station 500.

A sub station 600 serving as a slave station has a function of receiving and displaying the image information transmitted from the base station 500 and comprises an antenna 601, a transmission/reception unit 602, a frame processing unit 603, a display unit 606, a hopping pattern storage unit 608, an order-number storage unit 609, a voice processing unit 610, a microphone 611, a speaker 612, and a control unit 620.

The transmission/reception unit 602 performs TDMA-TDD radio communication using frequency hopping by: modulating, amplifying, and outputting an input data sequence; and amplifying and demodulating a received radio signal and outputting a received data.

The frame processing unit 603 adds a synchronization signal and an error-sensing error detection signal necessary for the TDMA-TDD radio communication to a control signal and a voice signal, generates a transmission data sequence in accordance with TDMA fames and slots, performs an error detection process on the received reception data sequence in accordance with the TDMA frames and slots, outputs the control signal, the image information, and the voice signal received at the slot where there is no error, and notifies the control unit 620 of timing of the frames and the slots.

The display unit 606 notifies the call from the base station 500 and displays the received image information.

The hopping pattern storage unit 608 is means for storing hopping patterns used for the frequency hopping.

The order-number storage unit 609 stores order number designated to the received image information. The voice processing unit 610 converts a digital voice signal input from the voice processing unit 603 to an analog voice signal and outputs the analog voice signal to the speaker 612, and it converts voice input from the microphone 611 to the digital voice signal and outputs the digital voice signal to the voice processing unit 603. The control unit 620 has a control process of discarding the redundantly-received image information based on the order number of the received image information and controls the whole sub station 600.

Now, an operation of the door phone constructed above will be described.

States of the base station 500 serving as a master station and the sub station 600 serving as a slave station are classified into three states: an image communication state in which the base station 500 calls the sub station 600 and the image information is transmitted; a voice communication state in which the sub station 600 performs the voice communication in response to the call of the base station 500; and an idle state.

Firstly, an operation in the idle state will be described.

In the idle state, the base station 500 periodically performs transmission of the control signal at a specific slot in the frame, and notifies identification information of the sub station, the number and hopping pattern of a slot for transmitting the control signal (hereinafter, referred to as a control slot), a stand-by hopping pattern of a reception slot, image transmission start (a call signal), and the like by using the control signal. The control slot is similar to that of the first embodiment and transmitted in a format of Fig. 3 (A); a synchronization signal and an error sensing signal (CRC1 of Fig. 3) of a control data field is added to the control signal; and the control signal is transmitted at the control data field.

Namely, the control unit 520 outputs the control signal to the frame processing unit 503 in accordance with timing of the control signal based on the timing of the slot notified from the frame processing unit 503.

The control unit 520 determines the transmission frequency based on the hopping pattern used for the control slot and the index managed by an internal portion of the control unit with reference to the hopping pattern storage unit 508 and controls the transmission/reception unit 502 to perform transmission at the frequency for which the control slot is determined.

Next, the frame processing unit 503 adds the synchronization signal and the error sensing signal (CRC1 of Fig. 3) of the control data field to the control signal input from the control unit 520 and outputs the signals to the transmission/reception unit 502; and the data sequence including the control signal is modulated and amplified by the transmission/reception unit 502 and transmitted from the antenna 501.

The base station 500 performs reception of the control signal of requesting for radio link establishment from the sub station 600 at the reception slot (hereinafter, referred to a stand-by slot) excluding the reception slot corresponding to the control slot from the reception slots in the frame in the idle state.

Namely, the control unit 520 selects a stand-by hopping pattern based on the index with reference to the hopping pattern storage unit 508 in accordance with the timing of the stand-by slot based on the timing of the slot notified from the frame processing unit 503, determines the reception frequency based on the selected hopping pattern and the index, and controls the transmission/reception unit 502 to perform reception at the frequency for which the stand-by slot is determined.

Next, when the control signal of requesting for the radio link establishment from the sub station 600 is received and the reception data is output from the frame processing unit 503, the frame processing unit 503 extracts the control data field and the error sensing signal based on the synchronization signal, performs error determination, and notifies the control unit 520 of the data sequence (that is, the control signal of requesting for the radio link establishment) of the control data field in which there is no error, and an operation of establishing duplex radio link between the base and sub stations starts up.

Now, an operation of the base station 500 in the idle state will be described with reference to Figs. 8 and 4.

Fig. 8 shows an example of a TDMA-TDD scheme where one frame is divided into 8 slots, that is, slots 1 to 8. The base station 500 performs transmission at the slots 1 to 4, and the sub station 600 performs transmission at the slots 5 to 8.

The base station 500 performs transmission of the control signal at the slot 1 by using the hopping pattern 1 (P1), and the index starts from 1 in the frame 1. The corresponding example of the communication frequency determined from the index and the hopping pattern is similar to that of the first embodiment, as shown in Fig. 4.

Namely, the base station 500 performs transmission of the control signal by using the hopping pattern 1 (P1) at the slot 1 in each of the frames. In the example, since the index is 1 for the frame 1, transmission is performed at f1; since the index is 2 for the frame 2 transmission is performed at f2; and after that, similarly, the index for each of the frames has a value circulating from 1 to 10, and the control signal is transmitted at each frequency of the hopping pattern 1 (P1) according to the index.

The base station 500 performs reception of the stand-by slot (slots 6, 7, and 8 in the example of Fig. 8) by changing the stand-by hopping patterns sequentially in each of the frames. Namely, in a case where the stand-by slot in the frame 1 is stood by at the hopping pattern 2 (P2), the stand-by of the hopping pattern 3 (P3) is performed in the frame 2, and after that, similarly, the stand-by operation is performed by circulating the hopping patterns in the frames P0 to P9.

As a result, since the index is 1 and the hopping pattern is 2 (P2) in the frame 1, reception is performed at f2; since the index is 2 and the hopping pattern is 3 (P3) in the frame 2, reception is performed at f4; and after that, similarly, transmission is performed at the reception frequency determined according to the index and hoping pattern.

Now, an operation of the sub station 600 in the idle state will be described.

In the idle state, the sub station 600 operates differently in the base station compensation operation state for establishing synchronization with the base station 500 and the synchronization establishment state where the synchronization with the base station 500 is established and the control signal of the base station is continuously received.

Firstly, an operation in the base station compensation operation state will be described.

In a case where the synchronization with the base station 500 is not established, for example, just after power is turned on, the sub station 600 is in the base station compensation operation state and performs an operating of establishing synchronization of frames, slots, and frequency hopping with the base station 500 by searching the control signal of the base station 500.

Since the sub station performs reception of the control signal of the base station 500, the sub station 600 consecutively receives one frequency at which the base station 500 transmits the control signal and performs a compensation operation for the base station 500. After receiving the control signal of the base station 500 by the consecutive reception, the sub station performs reception by changing the reception frequencies sequentially in each of the frame to consecutively receive the control signal of the base station 500.

Next, the sub station receives information on the number and hopping pattern of the transmission slot (which is used to transmit the control signal) included in the control signal of the base station 500 and establishes the synchronization of frames, slots, and frequency hopping with the base station 500. Namely, the control unit 620 reads an arbitrary one of frequencies stored in the hopping pattern storage unit 608 and controls the transmission/reception unit 602 to perform consecutive reception at the read frequency.

The reception data sequence received and demodulated by the transmission/reception unit 602 is output to the frame processing unit 603. The frame processing unit 603 detects the synchronization signal included in the reception data sequence; if the synchronization signal is detected, extracts the control data field and the error sensing signal based on the synchronization signal; performs error determination of the control data field based on the received error sensing signal; and if reception is determined to be normal, outputs the reception data sequence of the received control data field to the control unit 620.

The control unit 620 analyzes the reception data sequence input from the frame processing unit 603; determines whether or not the base station 500 is a stand-by device based on the identification information of the base station 500 included in the control signal; and controls the base station to proceed to an intermittent reception operation in each of the frames if the base station 500 is a stand-by device. Namely, similar to the base station 500, the control unit 620 reads the consecutive reception frequency from the hopping pattern storage unit 608 based on the indexes managed by the control unit 620, and controls the transmission/reception unit 602 to perform reception in accordance with the timing of the slot (for receiving the control signal of the base station 500 in advance) while changing the reception frequencies in each of the frames.

In a case where the frequency read from the hopping pattern storage unit 608 is f0 corresponding to the index 1 of the hopping pattern 0 (P0) when the control unit 620 performs the consecutive reception in advance, after the control signal for f0 is received by using the consecutive reception, reception is performed at f1, f2, ... by increasing the index by 1 for each of the frames. In addition, when information on the number and hopping pattern of the transmission slot used to transmit the control signal included in the control signal transmitted by the base station 500 are received, synchronization of slots and frequency hopping, that is, synchronization of indexes with the base station 500 is established.

The control unit 620 determines the slot (for receiving the control signal) based on the number of the slot included in the received control signal and notifies the frame processing unit 603 of the number of the slot (for receiving the control signal).

The frame processing unit 603 changes timing to receive the time slot (for receiving the control signal) with the notified slot number and proceeds to a state in which TDMA synchronization with the base station 500 is established, and after that, operates to notify the control unit 620 of timing of the TDMA frames and time slots.

The control unit 620 receives the information on the hopping pattern of the stand-by slot of the base station included in the control signal, takes synchronization of frequency hopping control at the stand-by slot of the base station, prepares an operation of link establishment, and starts to control the frequency hopping of the transmission slot (the stand-by slot of the base station).

The sub station 600 which establishes the synchronization of frames, slots, and frequency hopping with the bases station 500 proceeds to the synchronization establishment state in which the control signal of the base station is consecutively received. After that, the control unit 620 reads the reception frequency according to the index and the hopping pattern from the hopping pattern storage unit 608 in accordance with the timing of the control slot while updating the index for each of the frame based on the timing of frames and slots notified from the frame processing unit, sets the reception frequency of the transmission/reception unit 602, and controls the transmission/reception unit to perform reception of the control slot.

Now, an operation of an image communication state will be described.

When sensing an operation of call initiation from the manipulator 509, the control unit 520 of the base station 500 proceeds to the image communication state in which the image information is transmitted to the sub station 600.

Firstly, in order to transmit a control signal (hereinafter, referred to as a notification information) for notifying transmission start (that is, the call start) of the image information, the control unit 520 outputs the notification information to the frame processing unit 503 in accordance with timing of the control slot based on the timing of the frame and slots notified from the frame processing unit 503. The frame processing unit 503 loads the notification information on the control data field, adds the synchronization signal and the error detection signal thereto, and outputs the signals to the transmission/reception unit 502. The transmission/reception unit 502 modulates the data sequence input from the frame processing unit 503 and performs transmission of the notification signal through the antenna 501.

Subsequently, the control unit 520 notifies the transmission information construction unit 504 and then frame processing unit 503 of the transmission start of the image information.

The transmission information construction unit 504 notified with the transmission start of the image information requests the communication data storage unit 505 to update the image information. The communication data storage unit 505 starts up the camera unit 506 to pick up a new image, and updates the image information.

The transmission information construction unit 504 initiates the transmission times counted by the transmission-times counting unit 507, the order number managed by the transmission information construction unit 504, and a pointer for indicating a position of the image information of which predetermined-times output is completed. Next, the transmission information construction unit 504 outputs the order-number-designated image information (hereinafter, referred to as divided image information piece) having a one-slot transmittable length to the frame processing unit 503 every time when the frame processing unit 503 requests for the image information.

Namely, in order to output the same divided image information piece predetermined times, when the frame processing unit 503 requests for the image information, the transmission information construction unit 504 reads the image information (the divided image information piece) having a one-slot transmittable length from the image information of which predetermined-times output is not completed based on the pointer for indicating a position of the image information of which predetermined-times output is completed with reference to the image information stored in the communication data storage unit 505, designates the order number thereto, and outputs the same order-number-designated divided image information piece to the frame processing unit 503 while the transmission-times counting unit 507 counts the transmission times of transmitting the same divided image information piece, outputs the same order-number-designated divided image information piece predetermined times, and updates the pointer for indicating a position of the image information of which output is completed.

Next, when all the image information stored in the communication data storage unit 505 is complete my transmitted, as described above, the transmission information construction unit 504 requests the communication data storage unit 505 to update the image information; a new image is picked up with he camera unit 506 and stored in the communication data storage unit 505; the image information is updated; and the divided image information pieces of the updated image information are consecutively output.

On the other hand, the frame processing unit 5 03 notified with the transmission start of the ima ge information requests the transmission information construction unit 504 for the image information in accordance with the control slot and two slots having a predetermined positional relation with the control slot.

Next, a transmission data sequence is generated by using the order-number-designated divided image information pieces input from the transmission information construction unit 504, and the transmission data sequence is output to the transmission/reception unit 502. The transmission data sequence for transmitting the order-number-designated divided image information pieces utilizes a format of Fig. 3 (B), and the order-number-designated divided image information pieces are transmitted at the information data field.

At this time, the error sensing signal (CRC2 of Fig. 3) of the information data field is added. In addition, when the order-number-designated divided image information pieces are transmitted, the control slot for transmitting the control signal by using the format of Fig. 3 (A) is changed into the format of Fig. 3 (B). Here, the control signal is added to the control data field, the order number is added to the information data field, and the order-number-designated divided image information pieces are transmitted.

After notifying the transmission information construction unit 504 and the frame processing unit 503 of the transmission start of the image information, the control unit 520 determines the transmission frequency based on the hopping pattern used at the control slot and the index managed by the internal portion of the control unit 520 with reference to the hopping pattern storage unit 508 in accordance with the timing of the slot for transmitting the image information based on the timing of fames and slots notified from the frame processing unit 503, and controls the transmission/reception unit 502 to perform transmission at the determined frequency.

At this time, the control slot consecutively utilizes the hopping pattern used before the image information is transmitted is consecutively used, and the slot for transmitting another image information having a predetermined positional relation with the control signal unitizes one selected with a predetermined method based on the hopping pattern used for the control slot.

Now, an example where the base station 500 divides and transmits the image information will be described with reference to Fig. 9. Fig. 9 shows an example where the notification information of notifying the transmission start of the image information is transmitted in the frame 11, and after the frame 12, the image information is transmitted. In addition, in the example, the control slot is the slot 1, the hopping pattern is 1 (P1), and the index starts from 1 in the frame 11.

The control unit 520 has a control process of transmitting the notification information at the slot 1 in the frame 11, and after that, notifies the transmission information construction unit 504 and the frame processing unit 503 of the transmission start of the image information.

The transmission information construction unit 504 requests the communication data storage unit 505 to update the image information, and new image information is stored. The image information is divided into a plurality of one-slot transmittable divided image information pieces (D1, D2, and D3 of Fig. 9) as shown in Fig. 9, and in the example, each of the divided image information pieces is designated with the same order number and transmitted three times. Namely, the divided image information piece D1 designated with 1 is transmitted three times; the divided image information piece D2 designated with 2 is transmitted three times; and the divided image information piece D3 designated with 3 is transmitted three times.

After the frame 12, each of order-number-designated divided image information pieces is transmitted at the slot 1 (control slot) and the slot (that is, the slot 5) corresponding to the control slot. In addition, the hopping pattern of the slot 5 is selected so that the frequencies for transmitting the same image information are not equal to each other.

In the example of Fig. 9, as a method of determining the hopping pattern of the slot corresponding to the control slot, the transmission frequency of the control slot in the same frame and the transmission frequency of the slot corresponding to the control slot are determined to be separated farthest from each other. The hopping pattern of the slot corresponding to the control slot is selected as a hopping pattern obtained by adding 5 (half the number of hopping patterns) to the hopping patterns of the control slot, dividing the resulting value with 10 (same as the number of the hopping patterns), and taking the remaining hopping patterns. Namely, since the control slot is the hopping pattern 1 (P1), the slot 5 is selected as the hopping pattern 6 (P6).

The image information is transmitted multiple times at the different transmission frequencies by using two slots: the control slot and the slot having a predetermined positional relation with the control slot (in the example of Fig. 9, the divided image information piece D1 is transmitted at f2, f7, and f3; the divided image information piece D2 is transmitted at f8, f4, and f9; the divided image information piece D3 is transmitted at f5, f0, and f6.

Next, an operation of the image communication state of the sub station 600 will be described. In the idle state, the sub station 600 receives the control signal transmitted from the base station 500, and when the notification information transmitted from the base station 500 is received at the same slot as the slot for transmitting the control signal, changes from the idle state to the image communication state.

When receiving the notification information, the control unit 620 of the sub station 600 notifies the display unit 606 of the call start, puts the reception-completed order number stored in the order-number storage unit 609 into a non-received state, and starts to receive the image information at the slot for receiving the control signal and at the slot having a predetermined positional relation with the slot for receiving the control signal. Namely, the control unit 620 controls the frame processing unit 603 and the transmission/reception unit 602 to start the reception of the slot (the slot for receiving the control signal and the slot having a predetermined positional relation with the slot for transmitting the control signal) for receiving the image information based on the slot number and hopping pattern of the control slot for receiving the image information.

The control unit 620 reads the frequency corresponding to the hopping pattern of each of the slots (for transmitting the image information by the base station 500) from the hopping pattern storage unit 608 in accordance with the timing of the slot for receiving the image information based on the frames and slots notified from the frame processing unit 603, and control the transmission/reception unit 602 to set the reception frequency of the slot for transmitting the image information.

At this time, the control slot consecutively utilizes the hopping pattern used before the image information is transmitted. In addition, similar to the base station 500, the hopping pattern of the slot (for transmitting another image information) having a predetermined positional relation with the control slot unitizes a hopping pattern selected by using a predetermined methods based on the hopping pattern used for the control slot. Next, when the reception state for the image information proceeds and the image information is transmitted from the base station 500, the radio signal of the corresponding slot is received and demodulated by the transmission/reception unit 602 of the sub station 600, and the reception data sequence is output to the frame processing unit 603. The frame processing unit 603 extracts the order-number-designated divided image information pieces transmitted from the information data field and the error sensing signal based on the synchronization signal of the reception data sequence of each of the slots for receiving image information, and if there is no error, notifies the control unit 620 of the received order-number-designated divided image information pieces.

The control unit 620 reads the order number stored in the order-number storage unit 609; performs a control process of displaying the received divided image information pieces on the display unit 606 and updating the order number stored in the order-number storage unit 609 as the received order number if the order number of the received divided image information pieces is not equal to the order number stored in the order-number storage unit 609; and perform a control process of discarding the received divided image information pieces if the order number of the received divided image information pieces is equal to the order number stored in the order-number storage unit 609.

Now, an operation of a voice communication state will be described.

When response manipulation is performed by the manipulator 615 of the sub station 600 in the image communication state, the voice communication state proceeds. Namely, when sensing the response manipulation performed by the manipulator 615, the control unit 620 of the sub station 600 determines the communication slot and the hopping pattern, and outputs the control signal of requesting for radio link establishment to the frame processing unit 603 based on the timing of the slot notified from the frame processing unit 603 in accordance with the control of the hopping pattern of the stand-by slot of the base station 500. The frame processing unit 603 loads the control signal of requesting for radio link establishment on the control data field, adds the synchronization signal and the error detection signal thereto, and outputs the signals to the transmission/reception unit 602.

The transmission/reception unit 602 modulates the data sequence input from the frame processing unit 603 and performs transmission of the control signal of requesting for radio link establishment through the antenna 601.

The control unit 620 controls the transmission/reception unit 602 and the frame processing unit 603 to start reception by using the same hopping pattern as the hopping pattern used for the slot for transmitted the control signal of requesting for radio link establishment to stand by the response from the base station 500 at the slot having a predetermined positional relation with the slot for transmitted the control signal of requesting for radio link establishment.

Next, when receiving the response signal from the base station 500, the voice processing unit 610 starts up to start the voice communication. After that, the voice processing unit 610 converts a digital voice signal input from the frame processing unit 603 into an analog voice signal and outputs the analog voice signal to the speaker 612. In addition, the voice processing unit converts voice input from the microphone 611 into a digital voice signal and outputs the digital voice signal to the frame processing unit 603.

Next, the frame processing unit 603 loads the voice signal input from the voice processing unit 610 on the information data field at the slot (the slot for transmitting the radio link establishment request) for transmitting the voice signal, adds the synchronization signal and the error sensing signal (CRC2) thereto, generates the transmission data sequence of the voice signal, and outputs the signals to the transmission/reception unit 602. At the same time, the frame processing unit extracts the voice signal and the error sensing signal (CRC2) from the reception data sequence of the slot (the slot for receiving the response signal) for receiving the voice signal input from the transmission/reception unit 602 based on the synchronization signal, and outputs the voice signal of the slot where there is no error to the voice processing unit 610.

On the other hand, when receiving the radio link establishment request from the sub station 600 at the stand-by slot, the base station 500 transmits the response signal at the slot having a predetermined positional relation with the slot (for receiving the radio link establishment request), and after that, fixes the hopping patterns of the slot (for receiving the radio link establishment request) and the slot having a predetermined positional relation with the slot (for receiving the radio link establishment request) as the hopping pattern at the time when the radio link establishment request is received, and performs the voice communication.

Namely, when the radio link establishment request at the stand-by slot is received and the radio link establishment request is notified from the frame processing unit 503, the control unit 520 selects the same hopping pattern as the hopping pattern for receiving the radio link establishment request with reference to the hopping pattern storage unit 508 in accordance with the slot having a predetermined positional relation with the slot for receiving the radio link establishment request, determines the transmission frequency based on the index managed by an internal portion of the control unit, controls the transmission/reception unit 502 to perform transmission at the determined frequency, and output the response signal to the frame processing unit 503.

The frame processing unit 503 loads the response signal on the control data field, adds the synchronization signal and the error sensing signal thereto, and outputs the signals to the transmission/reception unit 502. The transmission/reception unit 502 modulates the data sequence input from the frame processing unit 503 and performs transmission of the response signal through the antenna 501.

Next, the control unit 520 starts up the voice processing unit 510 to start the voice communication. After that, the voice processing unit 510 converts a digital voice signal input from the frame processing unit 503 into an analog voice signal and outputs the analog voice signal to the speaker 512. In addition, the voice processing unit converts voice input from the microphone 511 into a digital voice signal and outputs the digital voice signal to the frame processing unit 503.

Next, the frame processing unit 503 loads the voice signal input from the voice processing unit 510 on the information data field at the slot (the slot for transmitting the response signal) for transmitting the voice signal, adds the synchronization signal and the error sensing signal (CRC2) thereto, generates the transmission data sequence of the voice signal, and outputs the signals to the transmission/reception unit 502. At the same time, the frame processing unit extracts the voice signal and the error sensing signal (CRC2) from the reception data sequence of the slot (the slot for receiving the radio link establishment request) for receiving the voice signal input from the transmission/reception unit 502 based on the synchronization signal, and outputs the voice signal of the slot where there is no error to the voice processing unit 510.

Now, transition from the image communication state to the voice communication state well be described with reference to Fig. 5. Fig. 5 shows an example where the control slot is the slot 1, and the voice communication starts by using the slots 3 and 7 during the image information communication at the slots 1 and 5. In addition, in the example, in the frame 21, the index starts from 1, and the hopping pattern of the stand-by slot starts from 2. In addition, the numerals in the examples of the transmission and reception of the base and sub station of Fig. 10 denote frequencies (f is omitted and 1 denotes f1).

In Fig. 10, when the sub station 600 performs response manipulation in the frame 21, the sub station 600 selects an arbitrary one slot (slot 7 of Fig. 7) among the stand-by slots of the base station 500 at the next frame 22, and transmits the radio link establishment request at the frequency f4 corresponding to the stand-by hopping pattern 3 (P3) of the base station and the index 2 in accordance with control of the hopping pattern of the stand-by slot of the base station 500.

After the frame 23, the voice communication between the base and sub stations 500 and 600 starts at the transmission and reception frequencies corresponding to the indexes for each of the frames with the hopping pattern 3 (P3) at the slot 7 and the slot 3 corresponding to the slot 7.

On the other hand, when receiving the radio link establishment request at the slot 7 in the frame 22, the base station 500 selects the same hopping pattern as the hopping pattern at the time when the radio link establishment request is received a the slot 3 corresponding to the slot 7 in the next frame 23, and transmits the response signal at the transmission frequency f5 corresponding to the hopping pattern 3 (P3) and the index 3. After that, the voice communication between the base and sub stations 500 and 600 starts at the transmission and reception frequencies corresponding to the indexes for each of the frames with the hopping pattern 3 (P3) at the slot 7 and the slot 3 corresponding to the slot 7.

Now, transition from the voice communication state or the image communication state to the idle state will be described.

When call disconnection manipulation is performed by the manipulator 615 of the sub station in the voice communication state and is sensed by the control unit 620, the voice communication disconnection process starts.

The control unit 620 outputs the control signal for disconnection to the frame processing unit 503 in accordance with the timing of the slot for transmitting the voice communication, and similar to the case of transmitting the control signal of requesting for radio link establishment, transmits the control signal for disconnection to the base station 500.

Next, when receiving the control signal for disconnection confirmation from the base station 500, the sub station stops transmission and reception of the slot (for performing the voice communication) and reception of the control slot and the slot having a predetermined positional relation with the control slot among the slot (for transmitting the image information), proceeds to reception of only the control slot proceeds, and is transitioned into the idle state.

Oh the other hand, when receiving the control signal for disconnection from the sub station 600, similar to the case where the response signal for the radio link establishment request is received, the base station 500 transmits the control signal for disconnection confirmation at the slot (for transmitting the voice signal), stops transmission and reception of the slot (for performing the voice communication) and transmission of the control slot and the slot having a predetermined positional relation with the control slot among the slot (for transmitting the image information), stops image transmission of the control slot stops, and is transitioned into the idle state.

If not receiving a radio link establishment request from the sub station 600 in a predetermined time, the base station 500 stops transmission at the slot having a predetermined positional relation with the control slot, stops the image transmission at the control slot, and is transitioned into the idle state.

In addition, although the embodiment shows an example where the slot and hopping pattern for transmitting the image information is determined based on the control slot and transmission is performed by using two slots of the control slot and the slot having a predetermined positional relation with the control slot, the transmission of the image information may be performed by notifying the information (slot number) on the slot (for transmitting the image information) and the hopping pattern used for the slot (for transmitting the image information) with the notification information, for example, when the image transmission starts, and transmitting the image information at arbitrary one or more slots including the slot having a predetermined positional relation with the control slot.

In addition, although the embodiment shows an example where the slot and hopping pattern for transmitting the image information is determined based on the control slot and transmission is performed by using two slots of the control slot and the slot having a predetermined positional relation with the control slot, the transmission of the image information may be performed by using only the slot having a predetermined positional relation with the control slot.

In addition, although the embodiment shows an example where communication is performed by using frequency hopping, transmission and reception of the same transmission information may be performed with the same frequency or multiple frequencies at the multiple slots in TDMA-TDD communication which does not use the frequency hopping.

In addition, although the embodiment shows an example where the transmission times of transmitting same image information from the transmission side are predetermined, the transmission times of the same image information may be controlled to vary according to the reception state of the reception side. For example, in a case where the reception side determines that the reception level is low and a reception error is easy to occur, in a case where an error occurrence ratio of the received data exceeds a predetermined value, or in a case where there is loss of information due to the reception error (that is, a case where the probability for treating all the same image information transmitted from the transmission side as a reception error is too high), the reception side requests the transmission side to increase the transmission times, and the transmission side increases the transmission times of the same image information in response to the request. On the contrary, in a case where almost no reception error occurs, the reception side requests the transmission side to decrease the transmission times, and the transmission side decreases the transmission times of the same image information in response to the request. The transmission-times changing request may be implemented at the time of proceeding to the voice communication state (in case of the radio communication device of the embodiment) with the sub station 600 transmitting the transmission-times changing request (including information on the desired transmission times) at the stand-by slot of the base station 500 (similar to the operation of radio link establishment request from the sub station 600 to the base station 500) and the base station 500 receiving the transmission-times changing request.

In addition, the number of the slots used for transmission and reception may be increased or decreased during communication. For example, in a case where the transmission times is changed in accordance with the aforementioned transmission-times changing request, the transmitting slot may be the same as that of before-changed slot, and a new transmitting slot may be added if available slots are remained in the base station (transmission side). In a case where the transmitting slot is added, information (slot number, transmission frequency, or hopping pattern) on the slot newly added to the currently transmitting slot is notified to the reception side, and then, transmission starts at the added slot. In the embodiment, since both of the information data field for transmitting the image information and the control data field for transmitting the control information are transmitted at the transmitting slot for the image information, the addition of slot may be implemented by notifying the reception side of the information (slot number, transmission frequency, or hopping pattern) at the added slot in the control data field. In addition, in a case where only the available slots at the time of the transmission start are the control slot and the slots corresponding to the control slot, and after the transmission start, other slots are available, it is possible to effectively slots by adding the slots during the communication. On the contrary, in a case where transmission is performed by using many slots, in a case where there is a few empty slots due to other slots being used for voice communication or the like, or in a case where transmission-times reducing request is received from the reception side, and thus, there are too many transmitting slots in comparison to transmission information amount, the number of transmitting slots is controlled to be reduced. In this case, similar to the case of adding the slots, the transmission side notifies the reception side of the to-be-stopped slots, and the number of the transmitting slots is reduced.

According to the embodiment of the present invention, the transmission side divides the transmission information into image information pieces having a one-slot transmittable length, transmits each of the image information pieces multiple timers; and the reception side discards the redundantly-received information from the multiple-times received information. Therefore, all the multiple-times-transmitted same information is treated as a reception error and the occurrence frequency of loss of the received information can be reduced, so that communication quality can be improved.

In addition, since the frequency for the multiple-times transmission and reception of the same information is changed by using the frequency hopping, even in a case where a reception error occurs due to interference at a portion of frequency band used by an interference wave, all the multiple-times-transmitted same information is treated as a reception error and the occurrence frequency of loss of the received information can be reduced, so that communication quality can be improved.

In addition, in the TDMA-TDD communication, since transmission information is transmitted at the slot having a predetermined positional relation with the slot for transmitting the low-usage-efficiency control signal, an effect of effectively using the slots can be obtained. In addition, since transmission information is transmitted without using the slots available to duplex communication such as conversation, it is possible to transmit the transmission information event in a case where all the duplex conversation slots are in use.

In addition, since the information (slot number) on the slot (for transmitting the transmission information) and the hopping pattern used for the slot (for transmitting the transmission information) are notified at the time of transmission start of the transmission information and the transmission information is transmitted at arbitrary one or more slots including the slot having a predetermined positional relation with the control slot, the transmission of the transmission information can be implemented with an arbitrary hopping pattern at an arbitrary slot including the slot having a predetermined positional relation with the control slot according to an operation state of a radio communication device or propagation environment, so that it is possible to transmit the transmission information at a high speed by effectively using available frequency resources.

In addition, since transmission times can be increased or decreased in accordance with a request of the reception side irrespective of the number of communicating slots, the transmission times can be controlled to vary according to the reception state, so that optimal transmission control can be implemented according to propagation environment. In addition, the transmission times are reduced in good reception environment and the transmission times are increased in deteriorated reception environment, so that it is possible to transmit information witch high reliability of the reception information.

In addition, since the number of slots for performing information transmission can be increased or decreased during communication, the number of slots used for information transmission can be increased or decreased at an arbitrary timing according to the usage environment, so that it is possible to effectively use the slots.

### (Fourth Embodiment)

Now, a fourth embodiment of the present invention will be described with reference to the figures.

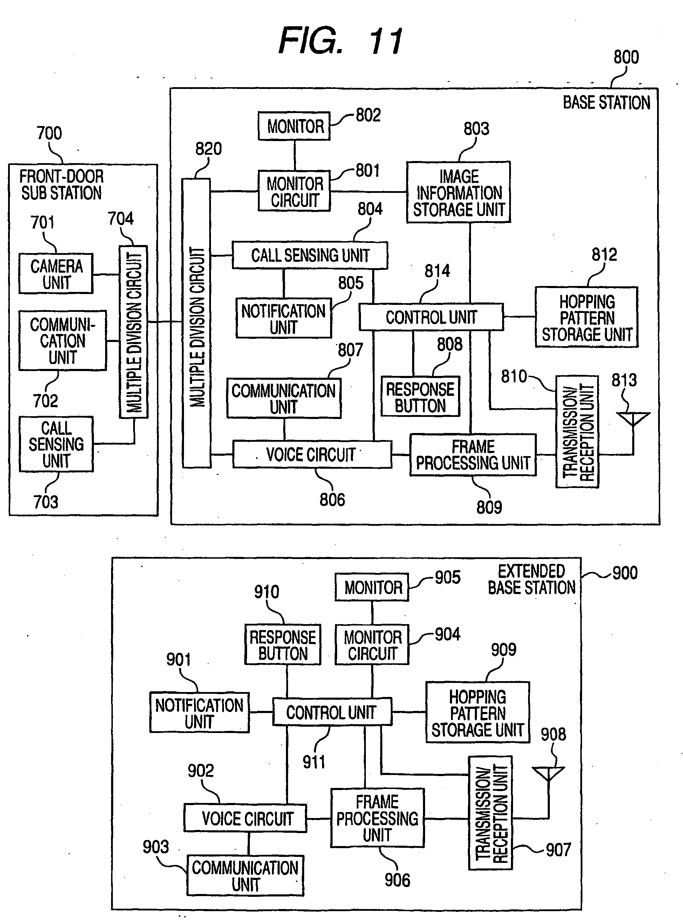

Fig. 11 is a block diagram showing a construction of a door phone which is an example of an image information communication system according to the fourth embodiment of the present invention.

First, the image information communication system according to an embodiment of the present invention will be described using the door phone as an example with reference to Fig. 11.

In Fig. 11, the door phone, which is an example of the image information communication system according to an embodiment of the present invention, comprises a front-door sub station 700, a base station 800 which is an image information transmission device, and an extended base station 900 which is an image information reception device.

The front-door sub station 700 comprises a camera unit 701, a communication unit 702, a call sensing unit 703, and a multiple division circuit 704.

The camera unit 701 photographs an image and outputs an image signal.

The communication unit 702 comprises a microphone, a speaker, an amplifier, etc. The communication unit outputs a voice signal from the speaker, amplifies an input signal from the microphone and outputs a voice signal of a visitor.

The call sensing unit 703 comprises a call button for allowing a visitor to notify his visit and a circuit for generating a notification signal when the call button is pushed.

The multiple division circuit 704 synthesizes an image signal, a voice signal, and a notification signal and outputs the synthesized signal to the base station 800 of the door phone. The multiple division circuit divides the voice signal from the base station 800 and outputs the divided voice signal to the communication unit 702.

The base station 800 comprises a multiple division circuit 820, a monitor circuit 801, a monitor 802, an image information storage unit 803, a call sensing unit 804, a voice circuit 806, a communication unit 807, a response button 808, a frame processing unit 809, a transmission/reception unit 810, a hopping pattern storage unit 812, an antenna 813, and a control unit 814.

The multiple division circuit 820 divides the synthesized signal into the image signal, the voice signal, and the notification signal from the front-door sub station 700 and outputs the divided signals to the respective units. The multiple division circuit also outputs a voice signal from the base station 800 to the front-door sub station 700.

The monitor circuit 801 outputs the image signal from the front-door sub station 700, which has been divided and output by the multiple division circuit 820, to the monitor 802. The monitor circuit also coverts the image signal into a digital signal and outputs the converted digital signal as image information.

The monitor 802 displays the image signal.

The image information storage unit 803 stores the image information which is the image signal converted into a digital signal and output from the monitor circuit 801.

The call sensing unit 804 senses the notification signal from the front-door sub station 700 divided and output by the multiple division circuit 820, notifies the control unit 814 of the sensed notification signal, and starts up the notification unit 805.

The notification unit 805 has a function of ringing a notification sound indicating a visitor.

The voice circuit 806 outputs the voice signal from the front-door sub station 700 divided and output by the multiple division circuit 820 to the communication unit 807, and outputs the voice signal from the communication unit 807 to the multiple division circuit. The voice circuit also converts the voice signal from the front-door sub station 700 into a digital signal and outputs the converted voice signal as voice information. The voice circuit also converts the voice information transmitted from the extended base station 900 into an analog signal and outputs the analog signal to the multiple division circuit 820.

The communication unit 807 comprises a microphone, a speaker, an amplifier, etc. The communication unit outputs a voice signal from the loud speaker, amplifies the input signal from the microphone, and outputs the amplified voice signal.

The response button 808 starts up a response operation when the base station 800 responds to a visitor.

The frame processing unit 809 adds a synchronization signal and an error-sensing error detection signal necessary for the TDMA communication to the voice information, the image information, and a control signal, generates a transmission data sequence in accordance with TDMA fames and time slots, performs an error sensing process in accordance with the TDMA frames and the time slots using a received reception data sequence, and outputs the voice information and the control signal received at the time slot where there is no error.

The transmission/reception unit 810 modul ates and amplifies an input data sequence. The transmission/reception unit amplifies and demodulates the received radio signals and performs TDMA radio transmission and reception using frequency hopping to output the received data.

The hopping pattern storage unit 812 stores hopping patterns used for the frequency hopping.

The control unit 814 controls division and re-transmission of the image information, controls the respective units to transmit the image information to the extended base station, and controls the respective units to allow the base station 800 to respond to a visitor . Namely, the control unit controls the whole base station 800.

The extended base station 900 comprises a notification unit 901, a voice circuit 902, a communication unit 903, a monitor circuit 904, a monitor 905, a frame processing unit 906, a transmission/reception unit 907, an antenna 908, a hopping pattern storage unit 909, a response button 910, and a control unit 911.

The notification unit 901 rings a notification sound indicating a visit.

The voice circuit 902 converts the voice information from the base station 800 into an analog signal and outputs the converted voice information to the communication unit 807. The voice circuit converts the voice signal transmitted from the communication unit 807 into a digital signal and outputs the converted voice signal to the frame processing unit 906.

The communication unit 903 comprises a microphone, a speaker, and an amplifier. The communication unit outputs a voice signal from the speaker, amplifies an input signal from the microphone, and outputs the amplified voice signal. The monitor circuit 904 generates and outputs an image signal based on image information and error information from the base station 800.

The monitor 905 displays the image signal.

The frame processing unit 906 adds a synchronization signal and an error-sensing error detection code necessary for the TDMA communication to the voice information and a control signal, generates a transmission data sequence in accordance with TDMA fames and time slots, performs an error sensing process in accordance with the TDMA frames and the time slots using a received reception data sequence, and outputs the voice information, the image information, and the control signal received at the time slot where there is no error.

The transmission/reception unit 907 modulates and amplifies the input data sequence. The transmission/reception unit amplifies and demodulates the received radio signal and performs TDMA radio transmission and reception using frequency hopping outputting reception data.

The hopping pattern storage unit 909 stores hopping patterns used for the frequency hopping.

The response button 910 starts up a response operation or notifies end of communication, when the extended base station 900 responds to a visitor.

The control unit 911 controls the respective units to receive the image information or voice information transmitted from the base station 800, controls to discard redundantly-received image information and output the image information except for the redundant image information to the monitor circuit 904, and controls the respective units to allow the base station 800 to respond to a visitor. Namely, the control unit controls the whole extended base station 900.

Operations of the door phone having the above-mentioned construction will be schematically described now.

When a visitor pushes a call button provided in the call sensing unit. 703 of the front-door sub station 700, a notification signal is output from the call sensing unit 703 and transmitted to the base station 800 through the multiple division circuit 704.

In the base station 800, the notification signal from the front-door sub station 700 is output to the call sensing unit 804 from the multiple division circuit 820. Then, the call sensing unit 804 starts up the notification unit 805, and a notification sound indicating a visitor is output from the notification unit '805. When the call sensing unit 804 receives the notification signal, the call sensing unit notifies the control unit 814 of the pushing of the call button in the call sensing unit 703 of the front-door sub station 700. The.control unit 814 starts the control of transmitting the notification information indicating the call start and the transmission of the image information to the extended base station 900.

The extended base station 900 serves as a slave station of the base station 800 and generally operate to receive the control signals of the base station 800.

When the extended base station 900 receives the notification information from the base station 800 and notifies the control unit 911 of the reception of the notification information, the control unit 911 starts up the notification unit 901 and the notification unit 901 outputs a notification sound indicating a visit. When the call button of the front-door sub station 700 is pushed, the pushing of the call button is notified to the base station 800 and the extended base station 900. The notification unit 805 and the notification unit 901 are controlled to ring a notification sound. The image signal pick up with the camera unit 701 of the front-door sub station 700 is transmitted to the base station 800 and the extended base station 900, and the transmitted image signal is displayed in the monitor 802 and the monitor 905.

The image signal pick up with the camera unit 701 of the front-door sub station 700 is transmitted to the multiple division circuit 704 and then output to the base station 800. The image signal transmitted from the front-door sub station 700 is output to the monitor circuit 801 from the multiple division circuit 820. The monitor circuit 801 outputs the image signal to the monitor 802, and the monitor 802 displays the image pick up with the camera unit 701 of the front-door sub station 700.

The control unit 814 of the base station 800 requests for the image information storage unit 809 for starting the storage of the image data at the same time as performing the control of transmitting the notification information to the extended base station 900.

When the image information storage unit 803 receives the request for starting the storage of the image data, the image information storage unit requests the monitor circuit 801 for outputting the image information and stores the image information output from the monitor circuit 801.

The monitor circuit 801 converts a one-screen signal of the image signals transmitted from the front-door sub station 700 into a digital signal and outputs the converted one-screen signal as image information to the image information storage unit 803, in response to the request for outputting the image information.

When the image information storage unit 803 stores the one-screen image information output from the monitor circuit 801, the image information storage unit outputs the notification of storage end to the control unit 814.

When receiving the notification of storage end, the control unit 214 divides the image information stored in the image information storage unit 803 in units of a one-slot transmittable data length, and sequentially reads the divided image information pieces. The control unit controls to transmit the read one-slot transmittable divided image information piece at a predetermined slot by predetermined times.

On the other hand, when receiving the notification information, the control unit 911 of the extended base station 900 controls the transmission/reception unit 907 and the frame processing unit 806 to receive the predetermined time slot and receives the image information transmitted from the base station 800. Then, when receiving the image information from the base station 800, the control unit 911 discards the redundantly-received divided image information pieces, and outputs the received image information to the monitor circuit 904. The monitor circuit 904 converts the image information into analog signals and outputs the converted image information to the monitor 905. Then, the image transmitted from the base station 800 is displayed on the monitor 905.

When transmitting all the one-screen image information stored in the image information storage unit 803, the control unit 814 of the base station controls to request for start of storing the image data, to update the image information in response thereto, and to repeatedly transmit new image information to the extended base station 900.

At this time, the control unit 814 may transmit the notification information indicating the start of transmitting the image information every time starting the transmission of new one-screen image information.

Next, the response operation will be described. When the response button 808 of the base station 800 is pushed and the push of the response button is sensed by the control unit 814, the control unit 814 controls to make possible the voice communication between the front-door sub station 700 and the base station 800 by starting up the voice circuit 806. Namely, the control unit performs a control such that the voice input from the microphone of the communication unit 702 of the front-door sub station 700 is output from the speaker of the communication unit 807 of the base station 800, and the voice input from the microphone of the communication unit 807 of the base station is output from the speaker of the communication unit 702 of the front-door sub station 700. When the response button 910 of the extended base station 900 is pushed and the pushing of the response button is sensed by the control unit 911, the control unit 911 controls to make possible the voice communication between the front-door sub station 700 and the extended base station 900 by starting up the voice circuit 902.

Namely, the control unit 911 first starts up a duplex radio link, initiates the duplex communication with the base station 800, and sets a voice path of the base station 800.

The control unit 911 converts the voice input from the microphone of the communication unit 903 of the extended base station 900 into a digital signal in the voice circuit 902, outputs the converted voice signal to the frame processing unit 906, and transmits the converted voice signal to the base station 800 by radio.

The voice information output from the frame processing unit 906 is output to the voice circuit 902, is converted into an analog signal by a voice circuit, and is then output from the speaker of the communication unit 903. On the other hand, when the duplex radio link with the extended base station 900 is started up and the duplex communication with the extended base station 900 is started, the control unit 814 of the base station 800 controls the voice circuit 806 to convert the voice signal transmitted from the front-door sub station 700 into a digital signal, to output the converted voice signal to the frame processing unit 809, and to transmit the output voice signal to the extended base station 900 by radio. Then, the control unit of the base station controls the voice circuit 806 to convert the voice information output from the frame processing unit 809 into an analog signal and to send the converted voice information to the front-door sub station 700 through the multiple division circuit 820, and controls the speaker of the communication unit 702 of the front-door sub station 700 to output the voice information.

Next, the control of radio communication between the base station 800 and the extended base station 900 will be described.

Here, a case where one frame is divided into 8 time slots is exemplified as control of TDMA. In this case, when the duplex radio communication is performed between the base station 800 serving as a master station and the extended base station 900 serving as a slave station, the transmission from the base station 800 to the extended base station 900 is performed using the first half of a frame (first to fourth time slots) and the transmission from the extended base station 900 to the base station 800 is performed using the second half of the frame (fifth to eighth time slots). In the control of frequency hopping, the communication is performed using 10 types of frequencies f1, f2, ..., f10 and 10 types of hopping patterns P1, P2, ..., P10. As the time slots used for transmitting and receiving image information, two time slots of a time slot for transmitting a control signal from the base station 800 and a time slot having a predetermined positional relation with the time slot for transmitting the control signal, that is, a time slot separated by four time slots from the time slot for transmitting the control signal, are used.

States of the base station 800 serving as a master station and the extended base station 900 serving as a slave station are classified into three states of an image communication state in which the image information is transmitted to the extended base station 900 from the base station 800, a voice communication state in which the base station 800 and the extended base station 900 transmit and receive voice signals using duplex radio communication, and an idle state.

First, operation in the idle state will be described.

In the idle state, the base station 800 transmits a control signal using a specific time slot in a frame. The construction of the time slot is similar to that of the third embodiment. As shown in Fig. 8 used for describing the third embodiment, a control signal is transmitted using the time slot 1 in each of the frames. An example of a data format of the data sequence transmitted using each time slot is similar to that of the first embodiment and is shown in Fig. 3. An example of a data format used in the time slot for transmitting a control signal is shown in Fig. 3 (A). Namely, in the example, the base station 800 transmits the control signal at the time slot 1 in each of the frames, that is, in a control data field of Fig. 3 (A). The control signal to be transmitted here includes identification information of the base station, a number and a hopping pattern of a transmission slot used for transmitting the control signal, and a hopping pattern received at a reception slot of the corresponding frame.

The control unit 814 outputs the control signal to the frame processing unit 809 in accordance with the timing of the transmission slot for the control signal. The frame processing unit 809 adds a synchronization signal and an error-sensing signal to the control signal and then output s the added signals to the transmission/reception unit 810.

The error sensing signal is stored in the field CRC1 in Fig. 3 (A), and an error-detecting code sequence (for example, a CRC code) generated from the control signal to be transmitted in the control data field.

The control unit 814 controls the frequency hopping. Namely, the control unit reads a communication frequency according to a hopping pattern stored in the hopping pattern storage unit 812 and sets a transmission frequency of the transmission/reception unit 810 in accordance with the transmission timing of the control signal.

An example of the hopping patterns stored in the hopping pattern storage unit 812 is similar to that of the first embodiment and is shown in Fig. 5. In the example, the frequencies f1 to f10 are repeatedly used for the hopping patterns P1 to P10.

In Fig. 8, the transmission frequencies used for each frame when transmitting the control signal using the hopping pattern P1 are shown. In the frame 1, the control signal is transmitted using f1, and in the next frame 2, the control signal is transmitted using f2. In the frame 11, the control signal is transmitted using f1 again. The indices shown in Figs. 4 and 8 are variables managed by the control unit 814 for controlling the frequency hopping and the values 1 to 10 are repeatedly used for each of the frames. For example, in the frame having an index of 1, the control unit 814 performs a control process of carrying out the communication using f1 when the hopping pattern P1 is used and carrying out the communication using f2 when the hopping pattern P2 is used.

Next, the reception control of the base station 800 in the idle state will be described.

The base station 800 receives a call from the extended base station 900 while sequentially changing the hopping pattern in each of the frames at a time slot except for the time slot for transmitting the control signal in the second half of the frame.

The control unit 814 reads the reception frequency from the hopping pattern storage unit 812 and sets the reception frequency of the transmission/reception unit 810 in accordance with the timing of the time slot to be received. When a call is received from the extended base station 900, the received data are output to the frame processing unit 809. The frame processing unit 809 divides the control signal and the error detection signal in the control data field based on the synchronization signal, checks an error of the control signal based on the received error detection signal, and notifies the control unit 814 of the received control signal when normal reception is checked.

An example where the reception is performed using the time slots 6 to 8 in each of the frames is shown in Fig. 8. In the frame 1, the reception is performed at the frequency corresponding to the hopping pattern P2, and in the next frame, the hopping pattern is changed by 1 and the reception is performed at the frequency corresponding to the hopping pattern P3. In the subsequent frames, the reception is performed while the hopping pattern is changed by 1 in each of the frames.

The reception frequency is determined based on the selected hopping pattern and the indices managed by the control unit 214. Namely, as shown in Fig. 2, when the frame 1 having an index of 1 uses the hopping pattern P2, the reception is performed using f2, and when the frame 2 having an index of 2 uses the hopping pattern P3, the reception is performed using f4.

Next, the control of the extended base station 900 in the idle state will be described.

In order to receive the control signal of the base station 800, the extended base station 900 consecutively receives one of the frequencies at which the base station 800 transmits the control signal, and performs a complementary operation of the base station 800. After consecutively receiving the control signal of the base station, the extended base station performs the reception while changing the reception frequency in each of the consecutive frames and consecutively receives the control signal of the base station.

Next, the number of the transmission slot and the information on the hopping pattern, which are used to transmit the control signal and included in the control signal of the base station 800, are received, and synchronization of the frames, the time slots, and the frequency hopping with the base station is established.

Namely, the control unit 911 reads an arbitrary one of the frequencies stored in the hopping pattern storage unit 909 and controls the transmission/reception unit 907 to perform the consecutive reception at the read frequency.

The reception data sequence received and demodulated by the transmission/reception unit 907 is output to the frame processing unit 906. The frame processing unit 906 detects a synchronization signal included in the reception data sequence; divides the control data field into the control signal and the error detection signal based on the synchronization signal when the synchronization signal is detected; performs error determination for the control signal based on the received error detection signal; and outputs the received control signal to the control unit 911 when normal reception is determined.

The control unit 911 determines whether or not the base station 800 is a stand-by device based on the identification information of the base station included in the control signal and controls the base station to proceed to an intermittent reception operation when it is determined that the base station is a stand-by device. Namely, similar to the base station 800, the control unit 911 reads the consecutive reception frequencies from the hopping pattern storage unit 909 based on the indexes managed by the control unit 911, and controls the transmission/reception unit 907 to perform the reception in accordance with the timing of the time slot for receiving the control signal of the base station 800 in advance while changing the reception frequency in each of the frames.

In a case where the frequency read from the hopping pattern storage unit 909 is f1 corresponding to the index 1 of the hopping pattern P1 when the control unit 911 performs the consecutive reception in advance, after the control signal for f1 is received in the consecutive reception, the reception is performed at f2, f3, ... with the index increasing one by one for each frame. In addition, when the number of the transmission time slots and the information on the hopping pattern included in the control signal transmitted by the base station 800 are received, the synchronization of the time slots and the frequency hopping, that is, synchronization of indexes, with the base station 800 is established.

Next, operations in the image communication state will be described.

When sensing that the call button of the call sensing unit 703 of the front-door sub station 700 is pushed, the control unit 814 of the base station 800 performs a control process to switch the idle state to the image communication state.

The control unit 814 outputs a call and notification information indicating transmission start of the image information instead of the control signal to the frame processing unit 809 in accordance with the timing of the time slot for transmitting the control signal. At this time, the transmission frequency is consecutively subjected to the frequency hopping control when the control signal is being transmitted.

The transmission of image information is started from the next frame after the notification information is received. The transmission of image information is performed using the time slot for transmitting the control signal and a time slot corresponding to the time slot for transmitting the control signal.

For example, when the control signal is transmitted at the time slot 1 as shown in Fig. 8, the image information is transmitted at the time slot 1 and the time slot 5. At this time, since the control signal and the image information are simultaneously transmitted at the time slot 1, the format of the transmission data sequence is changed.

An example of the format when the image information is transmitted is shown in Fig. 3 (B). In the example, the image information is transmitted in the information data field. A new error sensing code (described as CRC2 in Fig. 3 (B)) is added as error sensing data for the information data field for transmitting the image information. The format shown in Fig. 3 (B) is used similarly as the format of the transmission data sequence used for communication of the time slot (time slot 5) corresponding to the time slot (time slot 1) for transmitting the control signal and the image information is transmitted in the information data field.

The transmission frequency of time slot 1 is consecutively subjected to the frequency hopping control when the control signal is being transmitted. A hopping pattern is selected based on the hopping pattern of time slot 1, thereby determining the transmission frequency of time slot 5. When hopping pattern P1 is used for the transmission of time slot 1, the hopping pattern is preferably selected such that the transmission frequencies adjacent to time slot 1 and time slot 5 are equal to each other in case of using hopping pattern P6 to transmit time slot 5.

Here, operations will be described using an example where a control process such that the remainder obtained by adding 5 to the hopping pattern used for the time slot for transmitting the control signal and dividing the resultant value by 10 is used as a hopping pattern for a time slot corresponding to the time slot for transmitting the control signal.

The control unit 814 performs a control process to read the image information stored in the image information storage unit 803 while dividing the image information in a data length which can be transmitted at one time slot and to re-transmit the divided image information pieces in a state where the same transmission order numbers as predetermined times are designated to the divided image information pieces.

The transmission order numbers and the image information pieces are output to the frame processing unit 809 in accordance with the transmission timing, such that they should be transmitted using the information data fields of the time slot for transmitting the control signal and the time slot corresponding to the time slot for transmitting the control signal.

The frame processing unit 809 generates a data sequence having the format shown in Fig. 3 (B) by adding an error sensing code (CRC2) based on the data sequence of the information data field and outputs the generated data sequence to the transmission/reception unit 810. The transmission/reception unit 810 transmits the divided image information pieces while changing the frequency every time slot under control of the control unit 814.

On the other hand, the control unit 911 of the extended base station 900 performs a control process to switch the idle state to the image communication state, when receiving from the base station 800 that the call button of the call sensing unit 703 of the front-door sub station 700 is pushed and receiving the notification information indicating the transmission start of the image information.

In the idle state, the extended base station 900 is in a reception state synchronized with the base station 800 and receives the time slot at which the base station '800 transmits the control signal. When the base station 800 transmits the notification information at the time slot for transmitting the control signal, the transmission/reception unit 907 receives and demodulates the data sequence included in the notification information and outputs the demodulated data sequence to the frame processing unit 906.

The frame processing unit 906 divides the control data field based on the synchronization signal included in the reception data sequence and sends the divided control data field to the control unit 911. The control unit 911 analyzes the data sequence of the transmitted control data field. As a result of the analysis, when the data sequence includes the notification information, in order to receive the image information transmitted from the base station 800 from the next frame, the control unit starts controlling the transmission/reception unit 907 to receive a time slot corresponding to the time slot used for receiving the control signal, in addition to the time slot used for receiving the control signal under reception.

At this time, since it is necessary to synchronize the control of the reception frequency of the time slot corresponding to the time slot used for receiving the control signal with the transmission frequency from the base station 800, the reception frequency is determined using the same method as the method of determining the transmission frequency of the base station 800.

Namely, a hopping pattern of the time slot corresponding to the time slot for receiving the control signal is selected and the reception frequency in each of the frames is determined, based on the hopping pattern used for the time slot for receiving the control signal.

In this way, the extended base station 900 receiving the notification information can receive the image information transmitted from the base station 800 by using the time slot for receiving the control signal and the time slot corresponding to the time slot for receiving the control signal.

The transmission/reception unit 907 receives and demodulates the signal including the image information transmitted from the base station 800 and outputs the demodulated signal to the frame processing unit 906. The frame processing unit 906 divides the information data field into the data and the error sensing code (CRC2) based on the synchronization signal included in the reception data sequence, analyzes whether or not there is any reception error in the information data field based on the error sensing code (CRC2), and outputs the data of the information data field to the control unit 911 if there is no reception error.

When receiving the data of the information data field, that is, the transmission order number and the divided image information piece, the control unit 911 analyzes whether or not the image information is redundantly received based on the transmission order number, and outputs the image information to the monitor circuit 904 when the received image information is new image information. Then, the image is displayed by the monitor 905.

When the continuity of the transmission order numbers designated to the received image information pieces is lost, the control unit 911 determines that the reception data including the same image information pieces to be re-transmitted are all destroyed due to a reception error and the image information is lost, and outputs the error information to the monitor circuit 904. The monitor circuit 904 corrects the lost image information and displays the corrected image in the monitor 905.

For example, when the image information transmitted from the base station is well-known bit-map data, the control unit 11. calculates the number of lost time slots based on the received transmission order numbers, calculates the data number of the lost image information based on the number of lost time slots and a communication format, and notifies the monitor circuit 904 of the data number of the lost image information along with the error information.

The monitor circuit 904 performs a correction process to display pixel information corresponding to the data number of the lost image information in black and performs a control process such that the image displayed in the monitor 905 does not have irregularity due to the loss of image information.

Next, a state of the image information which is divided and transmitted will be described. The state is similar to that of the third embodiment and will be described with reference to Fig. 9.

Fig. 9 shows an example where the image information is transmitted when the base station 800 transmits the control signal using hopping pattern 1 at time slot 1. In addition, an example where the frequency hopping is controlled when the index is 1 in frame 1 is shown.

When the idle state where only the control signal is transmitted is transitioned to the image communication state, the base station 800 first transmits the notification information using the time slot for transmitting the control signal.

In the example shown in Fig. 9, the notification information is transmitted using time slot 1 of frame 1. The transmission of the image information is started from frame 1. In the example shown in Fig. 9, the one-screen image information is divided into three pieces D1, D2, and D3, the transmission order numbers of "1" to "3" are designated to the pieces, and three times of transmission are performed.

Namely, the transmission order number of "1" is designated to the first image information piece D1, which is transmitted using three time slots of time slot 1 of frame 2, time slot 5 of frame 2, and time slot 1 of frame 3.

Similarly, the transmission order number of "2" is designated to the second image information piece D2, which is transmitted using three time slots of time slot 5 of frame 3, time slot 1 of frame 4, and time slot 5 of frame 4. The transmission order number of "3" is designated to the third image information piece D3, which is transmitted using three time slots of time slot 1 of frame 5, time slot 5 of frame 5, and time slot 1 of frame 6.

At this time, the hopping pattern of time slot 5 is selected based on the hopping pattern of time slot 1, the hopping pattern of time slot 5 is P6 when the hopping pattern of time slot 1 is P1, and different frequencies are selected as the transmission frequencies in transmitting the same image information. For example, the image information piece D1 is transmitted at frequencies f2, f7, and f3, respectively.

Next, an operation of the voice communication state will be described.

When the response button 910 is pushed in the image communication state, the extended base station 900 starts the transition to the voice communication state.

When sensing the pushing of the response button 910, the control unit 911 of the extended base station 900 selects a time slot except for the time slot under reception of the image information, and starts the duplex radio communication with the base station 800. For example, when the extended base station 900 selects time slot 6, time slot 6 is used for the communication from the extended base station 900 to the base station 800, and time slot 2 is used for the communication from the base station 800 to the extended base station 900.

The control unit 911 calculates a hopping pattern for which the base station 800 stands by in the next frame based on the current index, reads the communication frequency corresponding to the calculated hopping pattern from the hopping pattern storage unit 909, sets the transmission frequency of the transmission/reception unit 907 in accordance with the timing of the time slot selected for the next frame, and outputs the control signal of a radio link start request to the frame processing unit 906.

The frame processing unit 906 generates a transmission data sequence in which the control signal of the radio link start request is included in the control data field of the format shown in Fig. 3 (B), and outputs the generated transmission data sequence to the transmission/reception unit 907. Accordingly, the control signal of the radio link start request is transmitted. Thereafter, in order to communicate with the base station 800, the control unit 911 performs a control process to transmit and receive both of a time slot at which the control signal of the radio link start request is transmitted and a reception time slot corresponding to the time slot for transmitting the control signal of the radio link start request in accordance with the predetermined hopping pattern.

On the other hand, the base station 800 always receives a reception time slot except for the reception time slot corresponding to the time slot for transmitting a non-used control signal. When a data sequence including the control signal of the radio link start request is received from the extended base station 900, the data sequence is received and demodulated by the transmission/reception unit 810 and then output to the frame processing unit 809.

The frame processing unit 809 extracts the control data field based on a synchronization signal included in the reception data sequence and notifies the control unit 814 of the extracted control data field.

The control unit 814 analyzes the data sequence of the notified control data field. As a result of the analysis, if there is a control signal of the radio link start request, the control unit controls the transmission/reception unit 810 to start transmission and reception at a time slot corresponding to the time slot at which the control signal of the radio link start request is transmitted, in order to perform duplex communicate with the extended base station 900 from the next frame.

Then, the control unit 814 outputs to the frame processing unit 809 a control signal of a response to the radio link start request in accordance with the timing of a transmission time slot of the time slots for performing duplex radio communication with the extended base station 900.

The frame processing unit 809 generates a transmission data sequence in which the control signal of the response to the radio link start request is included in the control data field of the format shown in Fig. 3(B), and outputs the generated transmission data sequence to the transmission/reception unit 810. Accordingly, the control signal of the response to the radio link start request is transmitted.

The control unit 814 enables the duplex communication with the extended base station 900 and controls the voice circuit 806 to convert the voice signal from the front-door sub station 700 into a digital signal and to output the converted voice signal to the frame processing unit 809. In addition, the control unit controls the voice circuit to convert the voice signal output from the frame processing unit 809 into an analog signal and to output the converted voice signal to the front-door sub station 700 through the multiple division circuit 820.

On the other hand, when receiving the control signal of the response to the radio link start request from the base station 800, the extended base station 900 sets a voice path similarly and controls the voice circuit 902 to convert the voice signal from the communication unit 903 into a digital signal and to output the converted voice signal to the frame processing unit 906. In addition, the extended base station controls the voice circuit to convert the voice signal output from the frame processing unit 906 into an analog signal and to output the converted voice signal to the communication unit 903. At this time, the digital-converted voice signal to be transmitted and received are transmitted and received in the information data field shown in Fig. 3 (B).

When the base station 800 goes on the voice communication state and the duplex radio communication is established, the control unit 814 notifies the frame processing unit 809 of the time slot for performing the duplex radio communication, and the frame processing unit 809 processes the data sequence in the information data field of the notified time slot as voice information. Similarly, the control unit 911 of the extended base station 900 notifies the frame processing unit 906 of the time slot for performing the duplex radio communication and processes the data sequence in the information data field of the notified time slot as voice information.

Next, the transition to the idle state from the voice communication state or the image communication state will be described.

When a communication disconnecting operation is performed by the response button 910 of the extended base station 900 in the voice communication state and the fact is notified to the control unit 911, a process of disconnecting the voice communication is started.

The control unit 911 outputs a control signal for disconnection to the frame processing unit 906 in accordance with the timing of the time slot at which the voice communication is performed. Then, the control signal for disconnection is transmitted to the base station 800, similar to the transmission of the control signal for the radio link start request.

When the control signal for disconnection confirmation is received from the base station 800, the transmission and reception of the time slots for performing the voice communication and the reception of the time slot having a predetermined positional relation with the control slot among the time slots for performing the reception of image information are stopped, and only the control slot is received, so that the idle state is set.

On the other hand, when the base station 800 receives the control signal for disconnection from the extended base station 900, the control signal for disconnection confirmation is transmitted at the slots for transmitting the voice signal, similar to the transmission of the response signal to the radio link establishing request. Then, the transmission and reception of the slots for performing the voice communication and the transmission of the slot having a predetermined positional relation with the control slot among the slots for transmitting the image information are stopped, and the transmission of image information at the control slot is stopped, so that the idle state is set.

When the base station 800 does not receive the radio link establishing request from the extended base station 900 within a predetermined time in the image communication state, the transmission of the slot having a predetermined positional relation with the control slot is stopped and the transmission of image information at the control slot is stopped, so that the idle state is set.

As described above, in the door phone according to an embodiment of the present invention, when the image information is transmitted from the base station 800 to the extended base station 900, the image information is divided into image information pieces having a one-time-slot transmittable data size of TDMA, the transmission order numbers are designated to the divided image information pieces, the divided image information pieces are transmitted multiple times, the divided image information pieces transmitted multiple times are received by the extended base station 900, and the image information is displayed by discarding the redundantly-received image information pieces based on the transmission order numbers. Accordingly, even when the expended base station 900 is provided such that the base station and the extended base station 900 are separated away and the reception level of the transmission signal from the base station 800 is low, it is possible to suppress information loss due to the reception error by receiving the same information multiple times, thereby improving the reliability of transmission of image information through simplex radio communication.

Even in environments having interference of interference waves, the interference of the interference waves at all the frequencies for transmitting the same information can be reduced by changing the communication frequency of the time slots in transmitting the same information multiple times. Accordingly, it is possible to suppress loss of information due to the reception error, thereby improving the reliability of transmission of the image information through the simplex radio communication.

The image transmission from the base station 800 to the extended base station 900 is performed through the simplex radio communication. Accordingly, since the number of extended base stations for receiving the image information transmitted from the base station 800 is not limited, any number of extended base stations can be provided.

When the image information received by the extended base station 900 is lost, the lost data length is calculated based on the transmission order numbers and the image to be displayed on the monitor 905 of the extended base station 900 is corrected. Therefore, even when the image information is lost, disturbance such as irregularity of an image to be displayed can be reduced.

When a plurality of extended base stations are provided and the extended base stations performs extension communication with each other using the base station 800, the time slots which can be used in the duplex communication between the base station 800 and the extended base stations 900. However, by transmitting the image information or the notification information at the slots for transmitting a control signal or time slots corresponding to the time slots for transmitting the control signal, the image information can be transmitted regardless of the number of time slots used for the duplex radio communication between the base station 800 and the extended base stations 900, thereby improving convenience.

Next, other control methods between the base station and the extended base station according to another embodiment of the present invention will be described.

In the above-mentioned embodiment, when the image information is transmitted from the base station to the extended base station, an example where predetermined times slots and hopping patterns are used has been described. However, when transmitting the image information, the transmission and reception of the image information may be performed by notifying the extended base station of the time slots and hopping patterns to be used.

For example, the base station may notify the time slots for transmitting image information and frequencies to be used (hopping patterns in a case of frequency hopping) by using the notification information indicating the transmission start of the image information and a control process may be performed such that the time slots of the extended base station for receiving the image information are set in accordance with the notification information.

By performing such a control process, the number or positions of time slots used for transmitting the image information to the extended base station from the base station can be freely set, and the image information can be transmitted at all the time slots of the time slots for transmitting the control signal, the time slots corresponding to the time slots for transmitting the control signal, and the time slots used for the duplex communication, thereby improving the transmission speed of the image information.

By changing a format of the time slot for transmitting the image information to a format in which the control data field and an error sensing code thereof are removed and the amount of image information to be transmitted at one time slot is increased, it is possible to enhance the transmission speed of the image information.

In a case where the image information is transmitted at the time slot for transmitting a control signal, the reception party can change a reception format with the reception of the notification information as momentum, by changing the format of the time slot at the time of transmitting the image information after transmitting the notification information, thereby obtaining the same advantage.

By re-transmitting the notification information indicating the transmission start of the image information, it is possible to reduce the possibility of failure in switching the control process due to a reception error of the notification information. At this time, by transmitting the image information in the information data field while transmitting the notification information in the control data field, it is possible to prevent the transmission speed of the image information from decreasing due to the re-transmission of the notification information.

The extended base station can transmit a control signal requesting to change the number of re-transmission at the time slot in which the base station is standing by, and the base station can change the number of transmission of the same image information in response to the request. As a result, when the communication condition is deteriorated and the image information is lost during reception of the image information, the communication quality can be improved by increasing the number of transmission of the same image information, and when the reception condition is good, the transmission speed of the image information can be enhanced by decreasing the number of transmission of the same image information. Therefore, it is possible to perform the optimum re-transmission control depending upon the communication condition.

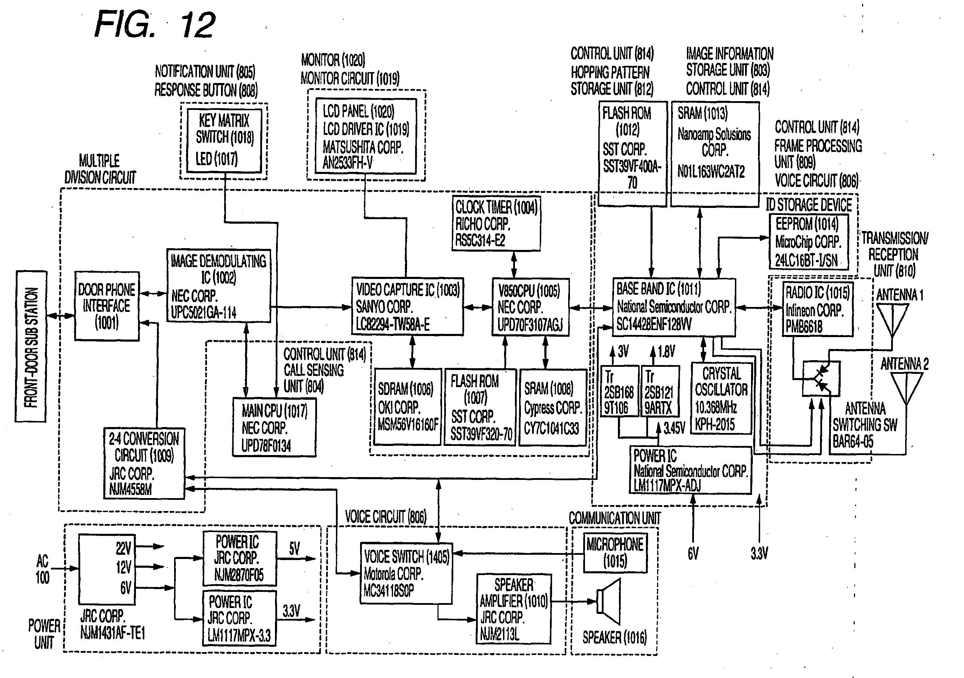

A hardware construction for embodying the base station 800 is shown in Fig. 12.

The multiple division circuit 820 serves as an electrical interface for dividing and synthesizing the image signals of a visitor received from the front-door sub station 700, the conversation voice signals with the visitor through the front-door sub station 700, and the notification signals of the visitor received from the front-door sub station 700, and comprises transistors, etc.

The hardware construction corresponding to the multiple division circuit 820 includes a door phone interface 1001, an image demodulation IC 1002 for converting the image signal transmitted between the front-door sub station 700 and the base station 800 and output from the door phone interface 1001 into an analog image signal, a video capture IC 1003 for converting the analog signal of the image demodulation IC into a digital image signal, SDRAM 1006 for storing the digital image signal, V850CPU 1005 which is a CPU for performing management such as recording and playback of a digital video signal, FLASH ROM 1007 for storing programs of V850CPU 1005, and SRAM 1008 which is a memory used for executing the programs of the V850CPU 1005.

In order to enable the conversation between a visitor at the front-door sub station 700 and a user at the base station 800, conversion between analog signals of 2-line signals such as telephone signals as interface signals with the front-door sub station 700 and analog signals of 4-line signals used for a voice switch 1405 and a baseband IC 1011 for radio communication constituting the voice circuit 806 of the base station 800 is performed by a 2-4 conversion circuit 1009.

The communication unit 807 comprises a microphone 1015 and a speaker 1016. The voice made from the base station party is output to the voice switch 1405 through the microphone 1015. The voice made from the front-door sub station 700 is amplified by a speaker amplifier circuit 1010 through the voice switch 1405 and is reproduced by the speaker 1016. The voice switch 1405 constituting a part of the voice circuit 806 is mounted so as to compare the sound volume from the microphone and the sound volume from the speaker and switch the transmission and the reception.

A main CPU 1017 combining the control unit 814 and the call sensing unit 804 senses that a signal is input from the front-door sub station 700. When sensing a call, the main CPU 1017 allows the notification unit 805 to notify a visit by turning on and off the LED 1017. When a key matrix switch 1018 corresponding to the response button 808 at the side of the base station is pushed in response thereto, the main CPU 1017 senses it and controls the whole units to perform voice communication.

When an analog image signal is input to the video capture IC 1003 from the front-door sub station 700, the video capture IC 1003 converts the analog image signal into a digital image signal using SRAM 1006.

V850CPU 1005 records the digital image signal and implements a function of adding time information to the digital image signal using the time information of a clock timer 1004. Such functions are embodied by allowing V850CPU 1005 to execute the programs stored in FLASH ROM 1007.

A signal generated by the V850CPU 1005 is output to the base band IC 1011 for the output to the extended base station 900.

A visitor's image from the front-door sub station 700 is displayed on an LCD panel 1020 using an LCD driver IC 1019 as a monitor circuit 801.

The base band IC 1011 includes a part of the control unit 814, the frame processing unit 809, and a part of the voice circuit 806. The base band IC 1011 adds a synchronization signal and an error-sensing error detection code necessary for the TDMA-TDD communication to the voice information, the image information, and the control signal, generates a transmission data sequence in accordance with the time slots, performs an error sensing process to the received reception data sequence in accordance with the frames and the time slots of TDMA, and outputs the voice information and the control signal received at the time slots having no error.

The storage of the programs to be executed by the base band IC 1011 and the hopping pattern storage unit 812 are embodied by FLASH ROM 1012.

A memory used for allowing the base band IC 1011 to execute the programs and the image information storage unit 803 implemented in the memory is embodied by SRAM 1013. In the radio communication between the base station and the extended base station, ID information used for allowing the extended base station to identify the base station is stored in EEPROM 1014.

The transmission/reception unit 810 is embodied by a radio IC 1015 performing TDMA radio transmission and reception using frequency hopping, which modulates and amplifies an input data sequence, amplifies and demodulates a received radio signal, and outputs the received data, and a switch 1016 switching a plurality of antennas.

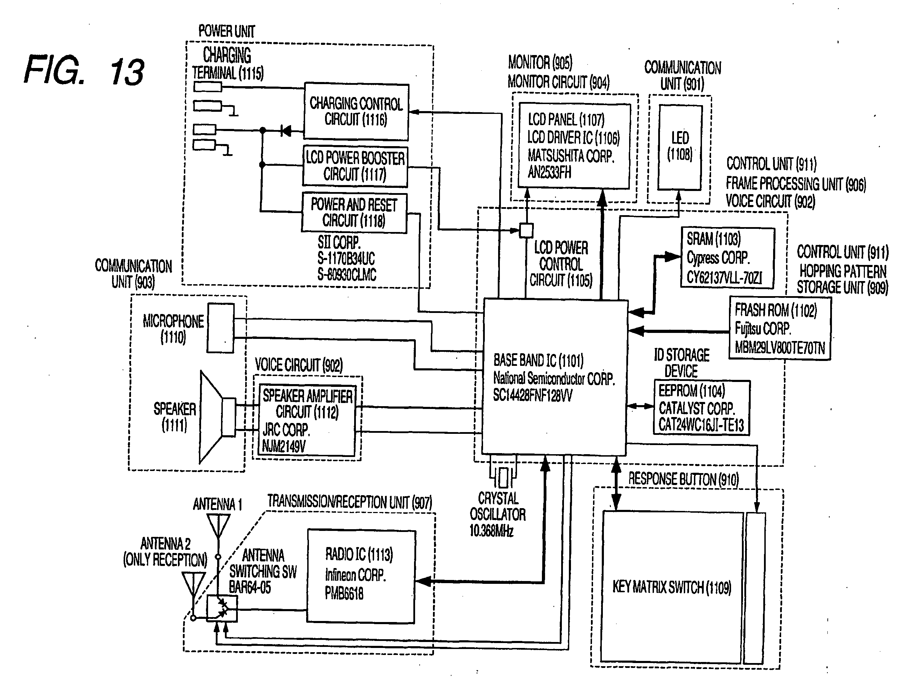

A hardware construction of the extended base station 900 is shown in Fig. 13.

The control unit 911 comprises a base band IC 1101, FLASH ROM 1102, SRAM 1103, EEPROM 1104, and an LCD power source control circuit 1105.

The base band IC 1101 controls the extended base station using FLASH ROM 1102 storing programs to be executed by the base band IC 1101 and SRAM 103 which is a memory used for allowing the base band IC 1101 to execute the programs. EEPROM 1014 stores the ID information used for allowing he base station to identify the extended base station in the radio communication between the base station and the extended base station.

The base band IC 1101 is implemented by the frame processing unit 906 used for the radio transmission and reception and a part of the voice circuit 902. The voice circuit 902 enables the communication with the front-door sub station 700 or the base station 800.

FLASH ROM 1102 stores the programs to be executed by the base band IC 1101 and the hopping patterns used for the radio communication, and includes the hopping pattern storage unit 909.

The LCD power control circuit 1105 controls the power source of the LCD driver IC 1106 based on the control of the base band IC 1101.

The monitor circuit 904 is implemented by the LCD driver IC 1106. The monitor is implemented by the LCD panel 1107.

The notification unit 901 is provided in the LED 1108 indicating arrival of a call from the base station 800. The response button 910 to which a user performs a response manipulation in response to the arrival of a call from the base station 800 is implemented by the key matrix switch 1109.

The communication unit 903 used for allowing a user of the base station 800 to communicate with the front-door sub station 700 is implemented by a microphone 1110 and a speaker 1111. A speaker amplifier circuit 1112 is implemented by a part of the voice circuit 902 for amplifying power to ring a sound through the speaker 1111.

The transmission/reception unit 907 for transmitting and receiving image or voice communication data to and from the base band IC 1101 by radio is implemented by a radio IC 1113. Here, an antenna changeover switch 1114 is used for the transmission and reception using a plurality of antennas.

The extended base station is mounted with a charging control circuit 1116 including a battery for carrying, an LCD voltage booster circuit 1117 as a power source for powering the LCD panel 1107, and a power and reset circuit 1118 for controlling the power and reset of the base band IC 1101. In addition, the extended base station is mounted with a charging terminal 1115 for charging the battery of the extended base station.

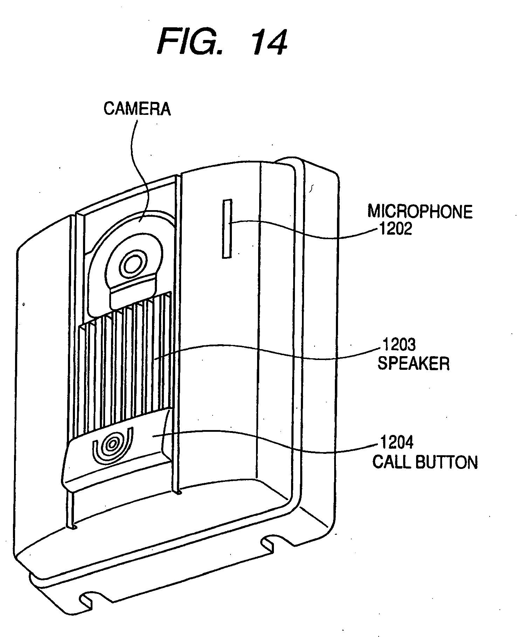

An external view of the front-door sub station 700 is shown in Fig. 14.

In a front face of the front-door sub station, a camera 1201 for making a visitor an image signal and a microphone 1202 and a speaker 1203 for communicating with the visitor and a call button 1204 that the visitor inform the base station 800 and the extended base station 900 of coming, are provided.

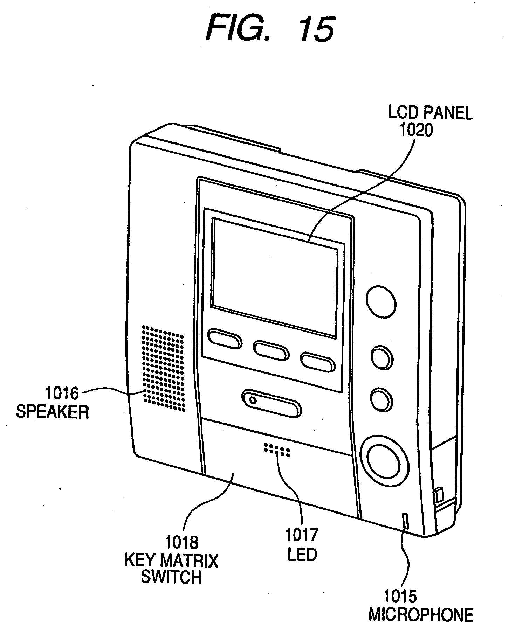

An external view of the base station 800 is shown in Fig. 15.

In a front face of the base station, a LCD panel 1020 for displaying the image of the visitor of the front-door sub station 700 and a Key Matrix switch 1018 and a LEC 1017 for displaying the coming by a light are provided and a microphone 1015 and a speaker 1016 for communicating with the visitor of the front-door sub station 700.

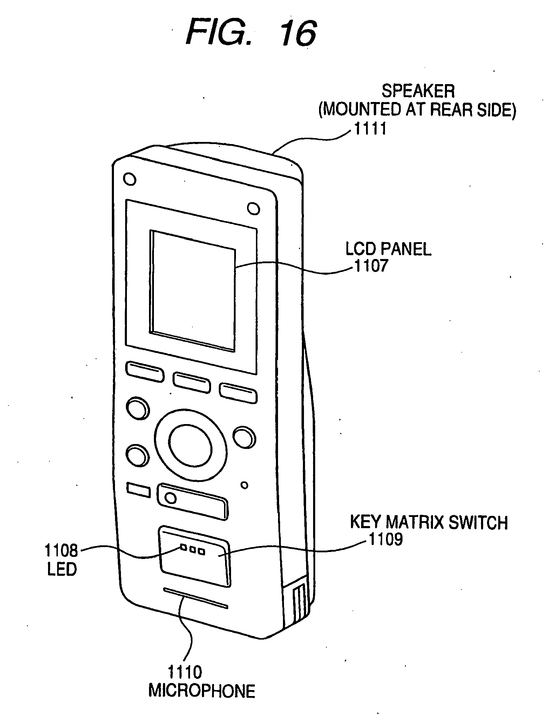

An external view of the extended sub station 900 is shown in Fig. 16.

The extended sub station 900 is possible to carry. In a front face of the extended sub station 900, a LCD panel 1107 for displaying the image of the visitor of the front-door sub station 700 and a Key Matrix switch 1109 and a LEC 1108 for displaying the coming by a light are provided. In a rear face of the extended sub station, a microphone 1110 and a speaker 1111 for communicating with the visitor of the front-door sub station 700.

### <INDUSTRIAL APPLICABILITY>

The present invention is useful for a radio communication system and a radio communication device for performing information transmission using radio signals, and is suitable particularly for a radio communication system and a radio communication device for simultaneously transmitting information to a plurality of counterparties with high reliability through one or more radio resources.

## Claims

1. A radio communication system using TDMA-TDD (Time Division Multiple - Access Time Division Duplex) radio communication for dividing one frame having a predetermined time period into N time slots and planing communication of independent signals at each of the time slots,
wherein the radio communication system comprises a master station and one or more slave stations,
wherein, when duplex communication between the master station and the slave station is performed, the master station performs TDMA-TDD radio communication using two time slots having a predetermined positional relation in the frame, and when simplex communication from the master station to the one or more slave stations is performed, the master station divides a transmission information into information pieces each having one-time-slot transmittable length and performs TDMA radio communication using M time slots (1 ≤ M ≤ N), the M time slots including a first time slot and other time slots, the first time slot being utilized for transmitting a control signal, the other time slots being utilized for transmitting one divided transmission signal of the divided transmission signals multiple times, the first time slot having a predetermined positional relation with the other time slots, and
wherein the slave station performs reception of the M time slots transmitted by the master station.

2. The radio communication system according to Claim 1,
wherein the master station transmits a broadcast signal for notifying information on the time slot used to transmit the transmission signal, and
wherein the slave station receives the broadcast signal and determines a time slot for receiving the transmission signal.

3. The radio communication system according to Claim 1 or 2, wherein the communication is performed using a frequency hopping scheme.

4. The radio communication system according to Claim 3, wherein hopping sequences used at the M time slots for transmitting the transmission signal are selected as at least two different hopping sequences.

5. The radio communication system according to Claim 1, wherein the transmission signal is image information.

6. A door phone system comprising:
a base station for transmitting image information; and
an extended base station for receiving the image information,
wherein the base station comprises:
a radio unit for dividing a predetermined frame into N time slots and performing communication at each of the time slots by using a TDMA-TDD (Time Division Multiple Access Time Division Duplex) radio communication;
storage unit for having an interface for inputting image information, the storage unit storing the input image information; and
control unit for dividing the image information stored in the storage means into data transmitted at the one time slot, designating order numbers to the divided data, and transmitting the order numbers and the divided image information multiple times repeatedly at M time slots (1≤ M ≤ N), and
wherein the extended base station comprises:
a radio unit for dividing the frame into the time slots and performing communication using the TDMA-TDD radio communication at each of the time slots;
display unit for displaying the received image information; and
control unit for receiving the order numbers and the divided image information multiple times at the M time slots, discarding redundantly-received image information, and displaying the received image information on the display unit.

7. The door phone system according to Claim 6,
wherein the base station notifies information on the time slot used to transmit the image information, and
wherein the extended base station receives the broadcast signal and the image information.

8. The door phone system according to Claim 6 or 7,
wherein the base station transmits a control signal synchronized with the time slot, and
wherein the extended base station receives the control signal and performs communication in synchronization with the base station.

9. The door phone system according to Claim 8, wherein, when the images information is transmitted, the base station performs transmission of the image information at the M time slots including at least one of a time slot for transmitting the control signal and a time slot having a predetermined positional relation with the time slot for transmitting the control signal.

10. The door phone system according to Claim 8, wherein the base station transmits the broadcast signal at least one times instead of the control signal or together with the control signal at the time slot for transmitting the control signal.

11. The door phone system according to any one of Claims 6 to 10, wherein times of transmitting the image information from the extended base station to the base station is directed, and the base station changes the times of transmitting the image information in accordance with the directed times.

12. The door phone system according to any one of Claims 6 to 11, wherein the communication is performed using a frequency hopping scheme.

13. The door phone system according to Claim 12, wherein hopping sequence used at the M time slot for transmitting the image information are selected as at least two different hopping sequences.

14. The door phone system according to Claim 12, wherein the base station includes a camera and the base station transmits the image information obtained by the camera.

## Patentansprüche

1. Radiokommunikationssystem, welches eine TDMA-TDD (Time Division Multiple Access Division Duplex) Radiokommunikation zum Teilen eines Rahmens, der einen vorbestimmten Zeitraum aufweist, in N Zeitfenster verwendet und eine Kommunikation unabhängiger Signale in jedem der Zeitfenster durchführt,
wobei das Radiokommunikationssystem eine Masterstation und eine oder mehrere Slavestationen aufweist,
wobei, wenn eine Duplexkommunikation zwischen der Masterstation und der Slavestation durchgeführt wird, die Masterstation eine TDMA-TDD Radiokommunikation durchführt, die zwei Zeitfenster verwendet, die eine vorbestimmte Positionsrelation in dem Rahmen aufweisen, und wenn eine simplex Kommunikation von der Masterstation zu den ein oder mehreren Slavestationen durchgeführt wird, die Masterstation eine Übertragungsinformation in Informationsteile, die jeweils eine ein-Zeitfenster übertragbare Länge aufweisen, teilt und eine TDMA Radiokommunikation unter Verwendung von M Zeitfenstern (1 ≤M ≤N) durchführt, wobei die M Zeitfenster ein erstes Zeitfenster und andere Zeitfenster aufweisen, das erste Zeitfenster zum Übertragen eines Steuersignals verwendet wird, die anderen Zeitfenster zum Übertragen eines geteilten Übertragungssignals des geteilten Übertragungssignals mehrere Male verwendet werden, das erste Zeitfenster eine vorbestimmte Positionsrelation mit den anderen Zeitfenstern aufweist, und
wobei die Slavestation einen Empfang der M Zeitfenster durchführt, die durch die Masterstation übertragen sind.

2. Radiokommunikationssystem nach Anspruch 1,
wobei die Masterstation ein Sendesignal zum Melden einer Information in dem Zeitfenster überträgt, welches zum Übertragen des Übertragungssignals verwendet wird, und
wobei die Slavestation das Sendesignal empfängt und ein Zeitfenster zum Empfangen des Übertragungssignals bestimmt.

3. Radiokommunikationssystem nach Anspruch 1 oder 2, wobei die Kommunikation unter Verwendung eines Frequenzsprungschemas durchgeführt wird.

4. Radiokommunikationssystem nach Anspruch 3, wobei Sprungsequenzen, die an den M Zeitfenstern zum Übertragen des Übertragungssignals verwendet werden, als wenigstens zwei unterschiedliche Sprungsequenzen ausgewählt werden.

5. Radiokommunikationssystem nach Anspruch 1, wobei das Übertragungssignal eine Bildinformation ist.

6. Türfernsprechsystem mit:
einer Basisstation zum Übertragen einer Bildinformation; und
einer erweiterte Basisstation zum Empfangen der Bildinformation,
wobei die Basisstation aufweist:
eine Radioeinheit zum Teilen eines vorbestimmten Rahmens in N Zeitfenster und Durchführen einer Kommunikation an jedem der Zeitfenster unter Verwendung einer TDMA-TDD (Time Division Multiple Access Time Division Duplex) Radiokommunikation;
eine Speichereinheit zum Aufweisen einer Schnittstelle zum Eingeben einer Bildinformation, wobei die Speichereinheit die Eingabebildinformation speichert; und
eine Steuereinheit zum Teilen der Bildinformation, die in dem Speichermittel gespeichert ist, in Daten, die an dem einen Zeitfenster übertragen sind, Bestimmen von Ordnungsnummern zu den geteilten Daten, und wiederholten Übertragen der Ordnungsnummern und der geteilten Bildinformationen mehre Male an M Zeitfenstern (1 ≤M ≤N), und
wobei die erweiterte Basisstation aufweist:
eine Radioeinheit zum Teilen des Rahmens in die Zeitfenster und Durchführen einer Kommunikation unter Verwendung der TDMA-TDD Radiokommunikation an jedem der Zeitfenster;
eine Anzeigeeinheit zum Anzeigen der empfangenen Bildinformation; und
eine Steuereinheit zum Empfangen der Ordnungsnummern und der geteilten Bildinformation mehrere Male an den M Zeitfenstern, Verwerfen einer redundanten empfangenen Bildinformation, und Anzeigen der empfangenen Bildinformation auf der Anzeigeeinheit.

7. Türfernsprechsystem nach Anspruch 6,
wobei die Basisstation eine Information an das Zeitfenster, welches zum Übertragen der Bildinformation verwendet wird, meldet, und
wobei die erweiterte Basisstation das Sendesignal und die Bildinformation empfängt.

8. Türfernsprechsystem nach Anspruch 6 oder 7,
wobei die Basisstation ein Steuersignal überträgt, welches mit dem Zeitfenster synchronisiert ist, und
wobei die erweiterte Basisstation das Steuersignal empfängt und eine Kommunikation in Synchronisation mit der Basisstation durchführt.

9. Türfernsprechsystem, nach Anspruch 8, wobei, wenn die Bildinformation übertragen wird, die Basisstation eine Übertragung der Bildinformation an den M Zeitfenstern durchführt, die wenigstens eines eines Zeitfensters zum Übertragen des Steuersignals und eines Zeitfensters aufweist, welches eine vorbestimmte Positionsrelation mit dem Zeitfenster zum Übertragen des Steuersignals aufweist.

10. Türfernsprechsystem nach Anspruch 8, wobei die Basisstation das Sendesignal wenigstens einmal anstelle des Steuersignals oder zusammen mit dem Steuersignal an dem Zeitfenster zum Übertragen des Steuersignals überträgt.

11. Türfernsprechsystem nach einem der Ansprüche 6-10, wobei Zeiten eines Übertragens der Bildinformation von der erweiterten Basisstation an die Basisstation angewiesen wird, und die Basisstation die Zeit eines Übertragens der Bildinformation gemäß der angewiesenen Zeiten ändert.

12. Türfernsprechsystem nach einem der Ansprüche 6-11, wobei die Kommunikation unter Verwendung eines Frequenzsprungschemas durchgeführt wird.

13. Türfernsprechsystem nach Anspruch 12, wobei Sprungsequenzen, die an dem M Zeitfenster zum Übertragen der Bildinformation verwendet werden, als wenigstens zwei unterschiedliche Sprungsequenzen ausgewählt werden.

14. Türfernsprechsystem nach Anspruch 12, wobei die Basisstation eine Kamera aufweist und die Basisstation die Bildinformation überträgt, die durch die Kamera erhalten ist.

## Revendications

1. Système de communication radio utilisant une communication radio de type TDMA-TDD ("Time Division Multiple Access-Time Division Duplex", pour Accès multiple par répartition temporelle-Duplexage par répartition temporelle) pour diviser une trame ayant une période de temps prédéterminée en N créneaux temporels et effectuer une communication de signaux indépendants dans chacun des créneaux temporels,
dans lequel le système de communication radio comprend une station maîtresse et une ou plusieurs stations esclaves,
dans lequel, lorsqu'une communication duplex entre la station maîtresse et la station esclave est effectuée, la station maîtresse effectue une communication radio de type TDMA-TDD en utilisant deux créneaux temporels ayant une relation de position prédéterminée dans la trame, et lorsqu'une communication simplex entre la station maîtresse et la ou les stations esclaves est effectuée, la station maîtresse divise des informations de transmission en des éléments d'informations ayant chacun une longueur transmissible d'un créneau temporel et effectue une communication radio de type TDMA en utilisant M créneaux temporels (1 ≤ M ≤ N), les M créneaux temporels comprenant un premier créneau temporel et d'autres créneaux temporels, le premier créneau temporel étant utilisé pour transmettre un signal de commande, les autres créneaux temporels étant utilisés pour transmettre de multiples fois un signal de transmission divisé obtenu à partir des signaux de transmission divisés, le premier créneau temporel ayant une relation de position prédéterminée avec les autres créneaux temporels, et
dans lequel la station esclave effectue la réception des M créneaux temporels transmis par la station maîtresse.

2. Système de communication radio selon la revendication 1,
dans lequel la station maîtresse transmet un signal de diffusion pour des informations de notification concernant le créneau temporel utilisé pour transmettre le signal de transmission, et
dans lequel la station esclave reçoit le signal de diffusion et détermine un créneau temporel destiné à recevoir le signal de transmission.

3. Système de communication radio selon la revendication 1 ou 2, dans lequel la communication est effectuée en utilisant une technique de saut de fréquence.

4. Système de communication radio selon la revendication 3, dans lequel des séquences de saut utilisées dans les M créneaux temporels pour transmettre le signal de transmission sont sélectionnées sous la forme d'au moins deux séquences de saut différentes.

5. Système de communication radio selon la revendication 1, dans lequel le signal de transmission est constitué d'informations d'images.

6. Système de portier phonique, comprenant :
une station de base pour transmettre des informations d'images, et
une station de base étendue pour recevoir les informations d'images,
dans lequel la station de base comprend :
un module radio pour diviser une trame prédéterminée en N créneaux temporels et effectuer une communication dans chacun des créneaux temporels en utilisant une communication radio de type TDMA-TDD ("Time Division Multiple Access-Time Division Duplex") ;
un module de stockage pour avoir une interface permettant l'entrée d'informations d'images, le module de stockage stockant les informations d'images fournies en entrée ; et
un module de commande pour diviser les informations d'images stockées dans le moyen de stockage en des données transmises dans le créneau temporel en question, désigner des numéros d'ordre pour les données divisées, et transmettre de multiples fois et de façon répétée les numéros d'ordre et les informations d'images divisées dans M créneaux temporels (1 ≤ M ≤ N), et
dans lequel la station de base étendue comprend :
un module radio pour diviser la trame en les créneaux temporels et effectuer une communication en utilisant la communication radio TDMA-TDD dans chacun des créneaux temporels ;
un module d'affichage pour afficher les informations d'images reçues ; et
un module de commande pour recevoir les numéros d'ordre et les informations d'images divisées de multiples fois dans les M créneaux temporels, éliminer les informations d'images reçues de façon redondante et afficher les informations d'images reçues sur le module d'affichage.

7. Système de portier phonique selon la revendication 6, dans lequel la station de base fournit des informations concernant le créneau temporel utilisé pour transmettre les informations d'images, et
dans lequel la station de base étendue reçoit le signal de diffusion et les informations d'images.

8. Système de portier phonique selon la revendication 6 ou 7,
dans lequel la station de base transmet un signal de commande synchronisé avec le créneau temporel, et
dans lequel la station de base étendue reçoit le signal de commande et effectue une communication en synchronisme avec la station de base.

9. Système de portier phonique selon la revendication 8, dans lequel, lorsque les informations d'images sont transmises, la station de base effectue la transmission des informations d'images dans les M créneaux temporels, y compris au moins l'un d'un créneau temporel destiné à la transmission du signal de commande et d'un créneau temporel ayant une relation de position prédéterminée avec le créneau temporel destiné à la transmission du signal de commande.

10. Système de portier phonique selon la revendication 8, dans lequel la station de base transmet le signal de diffusion au moins une fois au lieu du signal de commande ou en même temps que le signal de commande dans le créneau temporel destiné à la transmission du signal de commande.

11. Système de portier phonique selon l'une quelconque des revendications 6 à 10, dans lequel les instants de transmission des informations d'images de la station de base étendue à la station de base sont dirigés, et la station de base modifie les instants de transmission des informations d'images en conformité avec les instants dirigés.

12. Système de portier phonique selon l'une quelconque des revendications 6 à 11, dans lequel la communication est effectuée en utilisant une technique de saut de fréquence.

13. Système de portier phonique selon la revendication 12, dans lequel des séquences de saut utilisées dans les M créneaux temporels pour la transmission des informations d'images sont sélectionnées sous la forme d'au moins deux séquences de saut différentes.

14. Système de portier phonique selon la revendication 12, dans lequel la station de base comprend une caméra et la station de base transmet les informations d'images obtenues par la caméra.
